# EUROPÄISCHE PATENTSCHRIFT

(11) **EP 3 001 648 B1**
(45) Veröffentlichungstag und Bekanntmachung des Hinweises auf die Patenterteilung: **25.07.2018**
(21) Anmeldenummer: 15182849.8
(22) Anmeldetag: 28.08.2015
(51) Int. Cl.: H04L 29/14, H04L 12/28

(54) **STEUERUNG EINER KOMMUNIKATION ZWISCHEN EINEM GEBÄUDEEXTERNEN KOMMUNIKATIONSSERVER UND EINER GEBÄUDEINTERNEN KOMMUNIKATIONSENTITÄT**
CONTROL OF COMMUNICATION BETWEEN A COMMUNICATION SERVER OUTSIDE THE BUILDING AND A COMMUNICATION UNIT INSIDE THE BUILDING
COMMANDE D'UNE COMMUNICATION ENTRE UN SERVEUR DE COMMUNICATION EXTERNE AU BATIMENT ET UNE ENTITÉ DE COMMUNICATION INTERNE AU BATIMENT

(30) Priorität: 25.09.2014 DE 102014113884
(43) Veröffentlichungstag der Anmeldung: 30.03.2016
(73) Patentinhaber: Deutsche Telekom AG, 53113 Bonn (DE)
(72) Erfinder: HUND, Martin, 56370 Rettert (DE); UNTERSCHÜTZ, Thomas, 64331 Weiterstadt (DE); SINNING, Thorsten, 52080 Aachen (DE)
(74) Vertreter: Patentship Patentanwaltsgesellschaft mbH

(56) Entgegenhaltungen:
- US-A1- 2009 239 502
- US-A1- 2010 083 356

## Beschreibung

Die vorliegende Erfindung betrifft ein Zugangsportal zur Steuerung einer Kommunikation zwischen einem gebäudeexternen Kommunikationsserver eines gebäudeexternen Kommunikationsnetzwerks und einer gebäudeinternen Kommunikationsentität eines gebäudeinternen Kommunikationsnetzes, wobei das Zugangsportal einen Speicher zum Speichern von Authentifizierungsdaten zur Initiierung der Kommunikationsverbindung zu dem gebäudeexternen Kommunikationsserver umfasst. Die vorliegende Erfindung betrifft ferner eine gebäudeinterne Kommunikationsentität zur Steuerung einer Kommunikation zwischen einem gebäudeexternen Kommunikationsserver eines gebäudeexternen Kommunikationsnetzwerks und der gebäudeinternen Kommunikationsentität, wobei die gebäudeinterne Kommunikationsentität einen Speicher zum Speichern von Authentifizierungsdaten zur Initiierung der Kommunikationsverbindung zu dem gebäudeexternen Kommunikationsserver umfasst. Weiterhin betrifft die Erfindung Verfahren zur Steuerung einer Kommunikation zwischen einem gebäudeexternen Kommunikationsserver und einer gebäudeinternen Kommunikationsentität mit einem Speichern von Authentifizierungsdaten zur Initiierung der Kommunikationsverbindung zu dem gebäudeexternen Kommunikationsserver.

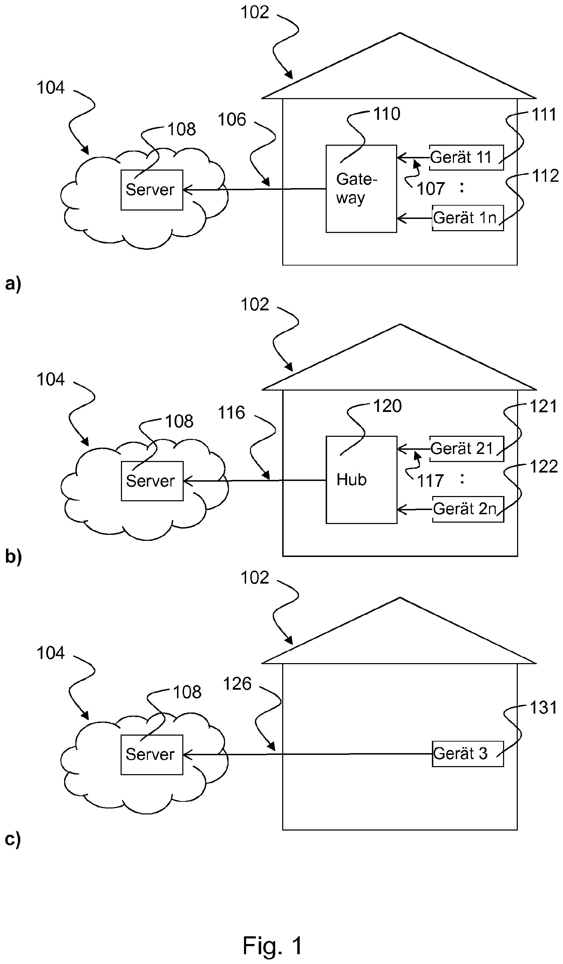

Im Bereich der Gebäude- und Heimautomation gibt es unterschiedliche topologische Ansätze Elektrogeräte im vernetzten Heim zu steuern, zum einen den Gateway-topologischen Ansatz und zum anderen den Server-topologischen Ansatz. Beim Gateway-topologischen Ansatz (siehe Figur 1a und 1b) ist ein Gateway 110 (Figur 1a) oder ein Hub 120 (Figur 1b) im Haushalts bzw. Gebäudenetz 102 vorzusehen, welches/welcher über das Internet 104 mit einem Server 108 in einem Rechenzentrum bzw. einem gebäudeexternen Netzwerk in Verbindung 106, 116 steht und fernbedient werden kann. Die im Haus- bzw. Gebäudenetz 102 befindlichen Elektrogeräte 111, 112, 121, 131 kommunizieren über ein Bussystem 107, 117, welches drahtgebunden ist oder per Funk und WLAN mit den Geräten in Kontakt steht, lokal mit dem Gateway 110 oder dem Hub 120. Beim Server-topologischen Ansatz (siehe Figur 1c) sind die Elektrogeräte 131 direkt mit dem Internet verbunden 126, kommunizieren im Internet mit einem Server 108 und werden von dort aus direkt gesteuert.
Bezüglich der Ausfallsicherheit haben beide Konzepte ihre Schwächen. Das erste Konzept hat z.B. den Nachteil, dass bei Ausfall des Gateways/Hubs die Kommunikation der Elektrogeräte mit dem Internet nicht sichergestellt ist. Das zweite Konzept hat den Nachteil, dass bei Ausfall der Internet-Verbindung die Elektrogeräte im Haus nicht mehr steuerbar sind. Die Druckschrift US 2010/0083356 A1 offenbart ein Verfahren und ein System zum Überwachen und Steuern von elektromechanischen Geräten von einem Datenzentrum aus. Zum Hochladen der gemessenen Daten der elektromechanischen Geräte an das zentrale Datenzentrum wird eine Authentifizierungsprozedur zwischen Gateway und Datenserver ausgeführt.

Die Druckschrift US 2009/0239502 A1 offenbart ein Authentifizierungssystem mit einem Authentifizierungsserver, der an ein mobiles Netzwerk angeschlossen ist. Ein mobiles Terminal ist an das mobile Netzwerk angeschlossen und wird über den Authentifizierungsserver authentifiziert. Wenn sich das mobile Terminal im Bereich des Heimnetzes befindet, kann es einen PC, der sich ebenfalls im Heimnetz befindet, beim Authentifizierungsserver authentifizieren. Es ist die Aufgabe der vorliegenden Erfindung, ein Konzept für eine verbesserte Ausfallsicherheit eines Gebäudeautomatisierungssystem zu schaffen, das auf Gebäudeautomatisierungssysteme mit und ohne Zugangsportal bzw. Gateway anwendbar ist.
Diese Aufgabe wird durch die Merkmale der unabhängigen Ansprüche gelöst. Vorteilhafte Weiterbildungsformen sind Gegenstand der abhängigen Ansprüche.
Schon an dieser Stelle sei betont, dass der Begriff der Gebäudeautomation bzw. Gebäudeautomatisierung und damit der Datenaufnahme und Datenübertragung innerhalb eines Gebäudes oder Gebäudekomplexes nicht nur die Steuerung von Funktionen innerhalb eines Gebäudes umfasst, sondern sich ganz allgemein auf die Steuerung beliebiger Funktionalitäten und auf die Auslese jeglicher Sensoren innerhalb eines Gebäudes oder Gebäudekomplexes erstreckt. Das umfasst beispielsweise auch den Betrieb von Alarmanlagen und die Auslese biologischer Parameter von im Gebäude befindlichen Personen, insbesondere im Rahmen von Health-Care bzw. Gesundheitsfürsorge. Insbesondere umfasst die Gebäudeautomation auch Überwachungs-, Steuer-, Regel- und Optimierungseinrichtungen, bei denen alle Sensoren, Aktoren, Bedienelemente, Verbraucher und andere technische Einheiten miteinander vernetzt sind.
Die im Folgenden vorgestellten Verfahren und Systeme können zum Steuern einer Kommunikation zwischen einem gebäudeexternen Kommunikationsserver eines gebäudeexternen Kommunikationsnetzwerks und einer gebäudeinternen Kommunikationsentität eines gebäudeinternen Kommunikationsnetzes verwendet werden.

Ein gebäudeinternes Kommunikationsnetz bezeichnet dabei jedes Netz oder Netzwerk, das auf einen geographisch begrenzten, d.h. geographisch lokalen Bereich konzentriert ist und üblicherweise die Vernetzung eines Hauses, eines Gebäudes bzw. Gebäudekomplexes oder eines Unternehmens bezeichnet. Es muss sich nicht zwingenderweise um ein einziges Gebäude handeln, es kann sich auch auf eine Ansammlung von Gebäuden beziehen, die beispielsweise unter dem Dach einer Firma oder einer Firmengruppe zusammengefasst sind. Auch muss es sich nicht zwangsläufig um eine Gebäude im strengen Sinne handeln, auch freie Plätze und sonstige Lokalitäten, die mit einem für sie verfügbaren Kommunikationsnetz ausgestattet sind, beispielsweise Open-Air Theateraufführungen, Public-Viewing, etc. sollen in dieser Anmeldung unter den Begriff des Gebäudes fallen.

Das gebäudeinterne Kommunikationsnetzwerk kann ein drahtgebundenes Netzwerk sein, beispielsweise unter Verwendung von Ethernet, USB, Feldbus, Kabel, etc. Das gebäudeinterne Kommunikationsnetzwerk kann ein drahtloses Netzwerk sein, beispielsweise unter Nutzung von WLAN, WiFi, Bluetooth, Infrarot oder anderen Nahbereichskommunikationsstandards. Als Protokolle zur Datenübertragung über das gebäudeinterne Kommunikationsnetz können beispielsweise IPv4 oder IPv6 genutzt werden.

Ein gebäudeexternes Kommunikationsnetz bezeichnet ein Netz, das nicht dem gebäudeinternen Kommunikationsnetz angehört. Es kann sich beispielsweise um ein öffentliches Netz handeln, wie z.B. das Internet, ein Telefonnetz eines Telefonbetreibers, z.B. ein drahtgebundenes Netz, wie beispielsweise ein POTS, ISDN, DSL oder Kabel-Netz oder ein drahtloses Netz, wie beispielsweise ein Mobilfunknetz eines Mobilfunkbetreibers, z.B. ein zelluläres Netz, beispielsweise unter Verwendung eines Mobilfunkstandards wie z.B. LTE, UMTS, GSM, etc. Als Protokolle zur Datenübertragung über das gebäudeexterne Kommunikationsnetz können IPv4 oder IPv6 genutzt werden oder ATM, STM oder andere Weitverkehrsstandards.

Der Kommunikationsserver des gebäudeexternen Kommunikationsnetzes kann ein Authentifizierungsserver sein, bei dem sich ein Gerät authentifizieren muss, um Zugang zu einem gebäudeinternen Kommunikationsnetz zu erlangen. Der Kommunikationsserver kann an beliebiger Stelle im Internet vorgehalten werden. Der Server kann ein virtueller Server sein.

Der Server kann in der Cloud vorgesehen sein. Unter Cloud bzw. Cloud Computing ist hier der Ansatz zu verstehen, abstrahierte IT-Infrastrukturen wie beispielsweise Rechenkapazität, Datenspeicher, Netzwerkkapazitäten, fertige Software oder hier den Server dynamisch an den Bedarf angepasst über ein Netzwerk zur Verfügung zu stellen. Die zur Verfügung gestellte abstrahierte IT-Infrastruktur wird auch als Cloud bzw. "Wolke" bezeichnet. Definierte technische Schnittstellen und Protokolle können Angebot und Nutzung dieser Dienstleistungen definieren.

Eine gebäudeinterne Kommunikationsentität bzw. Netzwerkentität beschreibt eine Einheit, Funktionseinheit oder Instanz in einem gebäudeinternen Kommunikationsnetzwerk oder Gebäudeautomationsnetzwerk. Eine gebäudeinterne Kommunikationsentität kann Signale von dem gebäudeinternen Kommunikationsnetzwerk empfangen und/oder Signale in das gebäudeinterne Kommunikationsnetzwerk senden. Eine gebäudeinterne Kommunikationsentität bzw. Netzwerkentität kann beispielsweise ein Aktor oder Sensor sein, der über ein Modem, eine Netzwerkkarte, einen Netzwerkabschluss oder einen Netzwerkadapter verfügt. Eine gebäudeinterne Kommunikationsentität bzw. Netzwerkentität kann Hardware und/oder Software umfassen, um die technischen Funktionen der gebäudeinternen Kommunikationsentität zu realisieren. Eine gebäudeinterne Kommunikationsentität bzw. Netzwerkentität kann Mikroprozessoren, Mikrochips, ASICs und/oder DSPs umfassen.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Verfahren und Systeme können in Zugangsportalen und gebäudeinternen Kommunikationsentitäten gebäudeinterner Kommunikationsnetze eingesetzt werden. Ein Zugangsportal ist eine Netzwerkentität, die den Zugang von außen auf ein gebäudeinternes Kommunikationsnetzwerk, beispielsweise ein Gebäudeautomationsnetz steuert. Das Zugangsportal kann als Gateway oder Hub realisiert sein, es kann auch Router-Funktionalitäten umfassen oder selbst als Router realisiert sein. Eine gebäudeinterne Kommunikationsentität eines gebäudeinternen Kommunikationsnetzes bezeichnet eine Komponente dieses gebäudeinternen Netzes. Es kann sich dabei beispielsweise um einen steuerbarer Aktor handeln, beispielsweise ein Stellglied für Heizung, Jalousien, Alarmanlage, Türschloss, Lichtschalter, Herd, Kühlschrank, Waschmaschine, Kaffeemaschine, Geschirrspülmaschine oder um einen steuerbaren Sensor, beispielsweise einen Temperaturfühler, einen Drucksensor, einen Lichtsensor, eine Lichtschranke, eine Uhr oder Armbanduhr oder eine Brille mit Sensorfunktion.

Die im Folgenden vorgestellten Verfahren und Systeme können auf Software Containern bzw. allgemein gesprochen Speichern basieren. Ein Software Container ist ein Speicher, der Daten, Parameter und Programme speichern kann. Es kann sich beispielsweise um ein RAM oder ein ROM handeln. Der Software Container kann auch als virtueller Speicher realisiert sein, beispielsweise als ein Stück Software Code, der eine Logikimplementierung umfasst. Der Software Container kann rudimentäre Funktionen eines Betriebssystems wahrnehmen, kann aber von den üblichen Betriebssystemen, mit denen er zusammenwirkt, unabhängig sein. Damit kann der Software Container auf verschiedenen Betriebssystemen laufen und mit diesen zusammenwirken. Ein Software Container kann beispielsweise eine Aufgabe betriebssystemunabhängig realisieren, z.B. das Überwachen einer gebäudeinternen Netzwerkentität eines Gebäudeautomationsnetzwerks. Zum Beispiel kann der Software Container eine Steuerung einer Heizungsanlage abhängig von gemessenen oder übertragenen Temperaturwerten eines Temperaturfühlers implementieren. Der Software Container kann in einem geschlossenen Kontext eines Gebäudes Steuerungsaufgaben implementieren. Dazu kann der Software Container über Authentifizierungsparameter verfügen, die ihm eine Authentifizierung beim für das Gebäude zuständigen Authentifizierungsserver ermöglichen. Der Software Container ist dabei schlank bzw. sparsam realisiert, d.h. im Gegensatz zu einem Betriebssystem verfügt er nur über wenige Funktionen, die für den Kontext der Gebäudeautomation, in dem er arbeiten kann, ausreichend sind. Der Software Container kann beispielsweise anhand weniger Codezeilen bzw. Parametern seine Steuerungs- und Authentifizierungsaufgaben wahrnehmen.

Aspekte der Erfindung basieren auf der Idee, in dem Gateway bzw. Zugangsportal des gebäudeinternen Kommunikationsnetzwerks, aber auch in anderen ausgewählten Geräten, d.h. gebäudeinternen Kommunikationsentitäten des gebäudeinternen Kommunikationsnetzes, Softwarecontainer oder allgemein gesprochen Speicher vorzusehen. Ein Softwarecontainer kann zum Beispiel ein virtueller Server Container sein. Dieser kann eine Software sein, die in einer lokalen Umgebung arbeitet, aber Funktionalitäten eines Servers zur Verfügung stellt und als Server von außen betriebssystemunabhängig wahrgenommen wird. Der virtuelle Server Container ist autonom gegenüber dem einbettenden System und kann auch als Vermittlungsschicht zwischen Client und Server arbeiten, d.h. als Middleware.

Software Container sind in der Lage, Daten aufzunehmen und abzugeben. Diese Daten können beispielsweise Authentifizierungsdaten sein. Diese Authentifizierungsdaten können Benutzerdaten sein, insbesondere kann der Software Container auch eine SIM-Karte emulierten und so Zugang zu verschlüsselten Daten oder als Zugangsschlüssel zu Funknetzen wie beispielsweise dem Mobilfunknetz dienen oder andere Zugangsdaten bzw. Zugangsinformationen ausgeben.

Die Einrichtung und Verwendung der Software Container kann durch eine Rule-Engine, d.h. einen Prozessor, der auf vorgebbaren Regeln arbeitet, im Gateway überwacht und gesteuert werden. Diese Rule-Engine kann beispielsweise so ausgestaltet sein, dass sie nur lokal auf Geräte zugreift und zusätzlich durch Verschlüsselung gesichert sein kann, um vor Manipulationen geschützt zu sein. Der Client kann die Benutzereingaben entgegennehmen und sie an den Software Container senden. Dort können sie verarbeitet werden und das Ergebnis kann zurück an den Client geschickt werden, der mit anderen Instanzen kommunizieren kann. Der Vorteil dieser Lösung liegt darin, dass man den Client fast beliebig austauschen kann, ohne etwas an der Anwendungslogik ändern zu müssen.

Software Container müssen keine eigenständig lauffähige Software sein, sondern können Teil eines Applikations-Servers bzw. eines Anwendungsservers sein. Jedoch existieren auch einige Varianten, welche ohne Applikations-Server verwendet werden können.

Der Vorteil eines Software Containers liegt also insbesondere in der Flexibilität und der Unabhängigkeit des Software Containers von den Gegebenheiten des Betriebssystems.

Gemäß einem ersten Aspekt betrifft die Erfindung ein Zugangsportal zur Steuerung einer Kommunikation zwischen einem gebäudeexternen Kommunikationsserver eines gebäudeexternen Kommunikationsnetzwerkes und einer gebäudeinternen Kommunikationsentität eines gebäudeinternen Kommunikationsnetzwerk, mit: einem Speicher zum Speichern von Authentifizierungsdaten zur Initiierung einer Kommunikationsverbindung zu dem Kommunikationsserver des gebäudeexternen Kommunikationsnetzwerks; einer ersten Kommunikationsschnittstelle zum Aufbau einer Kommunikation zu dem gebäudeexternen Kommunikationsserver unter Verwendung der gespeicherten Authentifizierungsdaten, wobei die erste Kommunikationsschnittstelle ausgebildet ist, die Kommunikationsverbindung zu dem gebäudeexternen Kommunikationsserver zu überwachen und bei Störung der Kommunikationsverbindung eine Störmeldung zu erzeugen; und einer zweiten Kommunikationsschnittstelle zum Kommunizieren mit der Kommunikationsentität des gebäudeinternen Kommunikationsnetzwerkes, wobei die zweite Kommunikationsschnittstelle ausgebildet ist, ansprechend auf einen Empfang der Störmeldung die gespeicherten Authentifizierungsdaten zur Initiierung einer Kommunikationsverbindung zwischen der gebäudeinternen Kommunikationsentität und dem gebäudeexternen Kommunikationsserver an die gebäudeinterne Kommunikationsentität auszusenden.

Dies hat den Vorteil, dass das Zugangsportal aufgrund des Speicherns der Authentifizierungsdaten zur Initiierung einer Kommunikationsverbindung zu dem Kommunikationsserver Flexibilität und Unabhängigkeit von den Gegebenheiten des Betriebssystems bietet. Durch das Speichern der Authentifizierungsdaten im Speicher des Zugangsportals kann die Kommunikationsverbindung flexibel von dem Zugangsportal auf die gebäudeinterne Kommunikationsentität umgestellt werden, falls die Kommunikationsverbindung zwischen Zugangsportal und Server ausfällt.

Gemäß einer Ausführungsform des Zugangsportals ist der Speicher ferner ausgelegt, Parameter zum Steuern der Kommunikationsentität des gebäudeinternen Kommunikationsnetzwerkes zu speichern; und ist die zweite Kommunikationsschnittstelle ausgebildet, ansprechend auf den Empfang der Störmeldung die gespeicherten Parameter zum Steuern der Kommunikationsentität des gebäudeinternen Kommunikationsnetzwerkes an die gebäudeinterne Kommunikationsentität auszusenden.

Dies hat den Vorteil, dass bei Ausfall der Kommunikationsverbindung zwischen Zugangsportal und Server neben den Authentifizierungsdaten noch weitere Parameter übertragen werden können, die für eine Steuerung von Komponenten des gebäudeinternen Kommunikationsnetzes notwendig sind, beispielsweise Schwellwerte zum Ansprechen von Stellgliedern wie z.B. Temperaturschwellwerte oder-bereiche, die einen Tag- oder Nachtbetrieb des Gebäudes festlegen.

Gemäß einer Ausführungsform des Zugangsportals ist der Speicher ferner ausgelegt, Programme zum Steuern der Kommunikationsentität des gebäudeinternen Kommunikationsnetzwerkes zu speichern; und ist die zweite Kommunikationsschnittstelle ausgebildet, ansprechend auf den Empfang der Störmeldung die gespeicherten Programme zum Steuern der Kommunikationsentität des gebäudeinternen Kommunikationsnetzwerkes an die gebäudeinterne Kommunikationsentität auszusenden.

Dies hat den Vorteil, dass ganze Logikblöcke, die in Form von Software bzw. Programmen implementiert sind, flexibel von dem Zugangsportal auf die gebäudeinterne Kommunikationsentität übertragen werden können.

Gemäß einer Ausführungsform des Zugangsportals sind die Programme zum Steuern der Kommunikationsentität des gebäudeinternen Kommunikationsnetzwerkes in Form einer Skript-Sprache realisiert.

Dies hat den Vorteil, dass die Programme sich leicht implementieren lassen und für den Nutzer verständlich sind.

Gemäß einer Ausführungsform umfasst das Zugangsportal ferner einen Prozessor, der ausgelegt ist, Steuerungsaufgaben zur Steuerung der gebäudeinternen Kommunikationsentität des gebäudeinternen Kommunikationsnetzwerks unter Nutzung der zweiten Kommunikationsschnittstelle auszuführen, und ferner ausgelegt ist, nach dem Aussenden der gespeicherten Authentifizierungsdaten an die gebäudeinterne Kommunikationsentität zumindest einen Teil der Steuerungsaufgaben weiterhin auszuführen.

Dies hat den Vorteil, dass das Zugangsportal flexibel ist in der Bearbeitung von Steuerungsaufgaben.

Gemäß einer Ausführungsform des Zugangsportals ist der Prozessor ausgelegt, den anderen Teil der Steuerungsaufgaben, der von dem Prozessor nicht mehr ausgeführt wird in Form von Programmen auf dem Speicher abzulegen.

Dies hat den Vorteil, dass Steuerungsaufgaben leicht und flexibel übertragbar sind an andere Kommunikationsentitäten des Gebäudes oder sogar an den Server. Steuerungsaufgaben in Form von Programmen sind von den anderen Einheiten leicht zu verstehen und könne schnell umgesetzt werden.

Gemäß einer Ausführungsform des Zugangsportals belastet der zumindest eine Teil der Steuerungsaufgaben, der von dem Prozessor weiterhin ausgeführt wird, die zweite Kommunikationsschnittstelle stärker als der andere Teil der Steuerungsaufgaben, der von dem Prozessor nicht mehr ausgeführt wird.

Dies hat den Vorteil, dass die Steuerungsaufgaben, die zu einer starken Belastung der zweiten (lokalen) Kommunikationsschnittstelle zwischen Zugangsportal und gebäudeinterner Kommunikationsentität führen, d.h. allgemein lastintensiv sind, weiterhin auf dem Zugangsportal ausgeführt werden, so dass sie auf dem Zugangsportal verbleiben und nicht auf den Server ausgelagert werden müssen. Damit bleibt der Großteil der Last auf der lokalen Kommunikationsschnittstelle konzentriert und wird nicht auf die gebäudeexterne Kommunikationsschnittstelle zwischen Server und lokaler Kommunikationsentität verlagert.

Gemäß einer Ausführungsform des Zugangsportals umfasst der zumindest eine Teil der Steuerungsaufgaben, der von dem Prozessor weiterhin ausgeführt wird, lokale Steuerungsaufgaben; und umfasst der andere Teil der Steuerungsaufgaben, der von dem Prozessor nicht mehr ausgeführt wird, Fernsteuerungsaufgaben.

Dies hat den Vorteil, dass eine flexible Aufteilung der Steuerungsaufgaben auf das Zugangsportal und den Server möglich ist, so dass die Last auf den Kommunikationsschnittstellen optimal verteilt werden kann.

Gemäß einer Ausführungsform des Zugangsportals ist das Zugangsportal ein Gateway, ein Hub oder ein Router.

Dies hat den Vorteil, dass diese Komponenten Standardkomponenten sind, die leicht ausgetauscht werden können.

Gemäß einer Ausführungsform des Zugangsportals ist die gebäudeinterne Kommunikationsentität des gebäudeinternen Kommunikationsnetzwerks ein steuerbarer Aktor, insbesondere ein Stellglied für Heizung, Jalousien, Alarmanlage, Türschloss, Lichtschalter, Herd, Kühlschrank, Waschmaschine, Kaffeemaschine, Geschirrspülmaschine.

Dies hat den Vorteil, dass der steuerbare Aktor über das Zugangsportal gesteuert werden kann und über entsprechende Intelligenz verfügt, die Authentifizierung zum Server zu übernehmen, um im Falle eines Ausfalls seiner Verbindung zu dem Zugangsportal sich selbst zu steuern bzw. direkt über den Server steuern zu lassen.

Gemäß einer Ausführungsform des Zugangsportals ist die gebäudeinterne Kommunikationsentität des gebäudeinternen Kommunikationsnetzwerks ein steuerbarer Sensor, insbesondere ein Temperaturfühler, ein Drucksensor, ein Lichtsensor, eine Lichtschranke, eine Armbanduhr oder eine Brille mit Sensorfunktion.

Dies hat den Vorteil, dass der steuerbare Sensor über das Zugangsportal gesteuert werden kann und über entsprechende Intelligenz verfügt, die Authentifizierung zum Server zu übernehmen, um im Falle eines Ausfalls seiner Verbindung zu dem Zugangsportal sich selbst zu steuern bzw. direkt über den Server steuern zu lassen. Gemäß einer Ausführungsform des Zugangsportals ist die zweite Kommunikationsschnittstelle eine Nahbereichsschnittstelle, insbesondere eine der folgenden: eine Bluetooth-Schnittstelle, eine Infrarot-Schnittstelle, eine WiFi-Schnittstelle, eine WLAN Schnittstelle, eine NFC-Schnittstelle, eine USB-Schnittstelle.

Dies hat den Vorteil, dass eine Nahbereichsschnittstelle standardmäßig implementiert werden kann und aufwandsgünstig ist bzgl. Leistung, Energieeffizienz und Kosten. Die Nahbereichsschnittstellen lassen sich leicht an die Bedürfnisse der gebäudeinternen Kommunikationsentitäten anpassen.

Gemäß einer Ausführungsform des Zugangsportals ist der Speicher in Form einer SIM Karte oder einer UICC Karte realisiert. Gemäß einer Ausführungsform des Zugangsportals ist die SIM Karte als Embedded SIM Karte oder als ein Teil einer Prozessorarchitektur ausgestaltet.

Gemäß einem zweiten Aspekt betrifft die Erfindung eine gebäudeinterne Kommunikationsentität eines gebäudeinternen Kommunikationsnetzwerks, mit: einem Speicher zum Speichern von Authentifizierungsdaten zur Initiierung einer Kommunikationsverbindung zu einem Kommunikationsserver eines gebäudeexternen Kommunikationsnetzwerks, wobei der Kommunikationsserver des gebäudeexternen Kommunikationsnetzwerks die gebäudeinterne Kommunikationsentität steuert; einer ersten Kommunikationsschnittstelle zum Aufbau einer Kommunikation zu dem gebäudeexternen Kommunikationsserver unter Verwendung der gespeicherten Authentifizierungsdaten, wobei die erste Kommunikationsschnittstelle ausgebildet ist, die Kommunikationsverbindung zu dem gebäudeexternen Kommunikationsserver zu überwachen und bei Störung der Kommunikationsverbindung eine Störmeldung zu erzeugen; und einer zweiten Kommunikationsschnittstelle zum Kommunizieren mit einer zweiten Kommunikationsentität, wobei die zweite Kommunikationsschnittstelle ausgebildet ist, ansprechend auf einen Empfang der Störmeldung die gespeicherten Authentifizierungsdaten zur Initiierung einer Kommunikationsverbindung zwischen der zweiten Kommunikationsentität und dem gebäudeexternen Kommunikationsserver an die zweite Kommunikationsentität auszusenden.

Dies hat den Vorteil, dass die gebäudeinterne Kommunikationsentität aufgrund des Speicherns der Authentifizierungsdaten zur Initiierung einer Kommunikationsverbindung zu dem Kommunikationsserver Flexibilität und Unabhängigkeit von den Gegebenheiten des Betriebssystems bietet. Durch das Speichern der Authentifizierungsdaten im Speicher der gebäudeinternen Kommunikationsentität kann die Kommunikationsverbindung flexibel von der gebäudeinternen Kommunikationsentität auf eine andere gebäudeinterne Kommunikationsentität oder ein Steuerungsgerät, wie beispielsweise ein Smartphone umgestellt werden, falls die Kommunikationsverbindung zwischen gebäudeinterner Kommunikationsentität und Server ausfällt.

Gemäß einer Ausführungsform umfasst die gebäudeinterne Kommunikationsentität einen Prozessor, der ausgelegt ist, über die zweite Kommunikationsschnittstelle eine Kommunikationsverbindung zu der zweiten Kommunikationsentität aufzubauen, um die gebäudeinterne Kommunikationsentität des gebäudeinternen Kommunikationsnetzwerks basierend auf der Kommunikationsverbindung zwischen der zweiten Kommunikationsentität und dem gebäudeexternen Kommunikationsserver durch den gebäudeexternen Kommunikationsserver zu steuern.

Dies hat den Vorteil, dass die Kommunikationsverbindung flexibel über eine zweite Kommunikationsentität umrangiert werden, beispielsweise über ein Smartphone geleitet werden kann, falls die Kommunikationsverbindung zwischen gebäudeinterner Kommunikationsentität und Server ausfällt. Damit erhöht sich die Flexibilität und die Ausfallsicherheit des Systems.

Gemäß einer Ausführungsform der gebäudeinternen Kommunikationsentität ist die Kommunikationsverbindung zwischen der zweiten Kommunikationsentität und dem gebäudeexternen Kommunikationsserver eine Mobilfunkverbindung.

Dies hat den Vorteil, dass bei Ausfall der Internetverbindung flexibel eine Mobilfunkverbindung genutzt werden kann, beispielsweise über ein Gerät mit Mobilfunkadapter, z.B. ein Smartphone, das im Gebäude verfügbar ist. Damit erhöht sich die Ausfallsicherheit und Flexibilität des Systems.

Gemäß einer Ausführungsform der gebäudeinternen Kommunikationsentität ist die zweite Kommunikationsentität eine zweite gebäudeinterne Kommunikationsentität des gebäudeinternen Kommunikationsnetzwerks ist.

Dies hat den Vorteil, dass ein anderes Gerät, das im Gebäude verfügbar ist, den Kommunikationsaufbau übernehmen kann. Beispielsweise kann die Heizungssteuerung dann von der Kühlschranksteuerung mit übernommen werden. Dies erhöht die Flexibilität und Ausfallsicherheit des Gebäudeautomationssystems.

Gemäß einer Ausführungsform der gebäudeinternen Kommunikationsentität ist die zweite Kommunikationsentität ein Steuergerät zum Steuern der gebäudeinternen Kommunikationsentität, insbesondere ein Smartphone, ein Mobiltelefon, ein TabletPC oder ein Kommunikationsgerät mit Funkadapter.

Dies hat den Vorteil, dass solche Steuergeräte leicht verfügbar sind, da mittlerweile fast jede Person über ein Smartphone, Mobiltelefon oder einen TabletPC verfügt. Das Gebäudeautomationssystem ist somit leicht zu steuern.

Gemäß einer Ausführungsform der gebäudeinternen Kommunikationsentität ist der Speicher ferner ausgelegt, Parameter zum Steuern der gebäudeinternen Kommunikationsentität des gebäudeinternen Kommunikationsnetzwerkes zu speichern; und ist die zweite Kommunikationsschnittstelle ausgebildet, ansprechend auf den Empfang der Störmeldung die gespeicherten Parameter zum Steuern der gebäudeinternen Kommunikationsentität des gebäudeinternen Kommunikationsnetzwerkes an die zweite Kommunikationsentität auszusenden.

Dies hat den Vorteil, dass bei Ausfall der Kommunikationsverbindung zwischen gebäudeinterner Kommunikationsentität und Server neben den Authentifizierungsdaten noch weitere Parameter übertragen werden können, die für eine Steuerung von Komponenten des gebäudeinternen Kommunikationsnetzes notwendig sind, beispielsweise Schwellwerte zum Ansprechen von Stellgliedern wie z.B. Temperaturschwellwerte oder -bereiche, die einen Tag- oder Nachtbetrieb des Gebäudes festlegen.

Gemäß einer Ausführungsform der gebäudeinternen Kommunikationsentität ist der Speicher ferner ausgelegt, Programme zum Steuern der gebäudeinternen Kommunikationsentität des gebäudeinternen Kommunikationsnetzwerkes zu speichern; und ist die zweite Kommunikationsschnittstelle ausgebildet, ansprechend auf den Empfang der Störmeldung die gespeicherten Programme zum Steuern der gebäudeinternen Kommunikationsentität des gebäudeinternen Kommunikationsnetzwerkes an die zweite Kommunikationsentität auszusenden.

Dies hat den Vorteil, dass ganze Logikblöcke, die in Form von Software bzw. Programmen implementiert sind, flexibel von der gebäudeinternen Kommunikationsentität auf die zweite Kommunikationsentität übertragen werden können.

Gemäß einer Ausführungsform der gebäudeinternen Kommunikationsentität sind die Programme zum Steuern der gebäudeinternen Kommunikationsentität des gebäudeinternen Kommunikationsnetzwerkes in Form einer Skript-Sprache realisiert.

Dies hat den Vorteil, dass die Programme sich leicht implementieren lassen und für den Nutzer verständlich sind.

Gemäß einer Ausführungsform der gebäudeinternen Kommunikationsentität ist die gebäudeinterne Kommunikationsentität des gebäudeinternen Kommunikationsnetzwerks ein steuerbarer Aktor, insbesondere ein Stellglied für Heizung, Jalousien, Alarmanlage, Türschloss, Lichtschalter, Herd, Kühlschrank, Waschmaschine, Kaffemaschine, Geschirrspülmaschine.

Dies hat den Vorteil, dass der steuerbare Aktor über die gebäudeinterne Kommunikationsentität gesteuert werden kann und über entsprechende Intelligenz verfügt, die Authentifizierung zum Server zu übernehmen, um im Falle eines Ausfalls seiner Verbindung zu der gebäudeinternen Kommunikationsentität sich selbst zu steuern bzw. direkt über den Server steuern zu lassen.

Gemäß einer Ausführungsform der gebäudeinternen Kommunikationsentität ist die gebäudeinterne Kommunikationsentität ein steuerbarer Sensor, insbesondere ein Temperaturfühler, ein Drucksensor, ein Lichtsensor, eine Lichtschranke, eine Armbanduhr oder eine Brille mit Sensorfunktion.

Dies hat den Vorteil, dass der steuerbare Sensor über die gebäudeinterne Kommunikationsentität gesteuert werden kann und über entsprechende Intelligenz verfügt, die Authentifizierung zum Server zu übernehmen, um im Falle eines Ausfalls seiner Verbindung zu der gebäudeinternen Kommunikationsentität sich selbst zu steuern bzw. direkt über den Server steuern zu lassen.

Gemäß einer Ausführungsform der gebäudeinternen Kommunikationsentität ist die zweite Kommunikationsschnittstelle eine Nahbereichsschnittstelle, insbesondere eine der folgenden: eine Bluetooth-Schnittstelle, eine Infrarot-Schnittstelle, eine WiFi-Schnittstelle, eine WLAN Schnittstelle, eine NFC-Schnittstelle, eine USB-Schnittstelle.

Dies hat den Vorteil, dass eine Nahbereichsschnittstelle standardmäßig implementiert werden kann und aufwandsgünstig ist bzgl. Leistung, Energieeffizienz und Kosten. Die Nahbereichsschnittstellen lassen sich leicht an die Bedürfnisse der gebäudeinternen Kommunikationsentitäten anpassen.

Gemäß einer Ausführungsform der gebäudeinternen Kommunikationsentität ist der Speicher in Form einer SIM Karte oder einer UICC Karte realisiert. Gemäß einer Ausführungsform der gebäudeinternen Kommunikationsentität ist die SIM Karte als Embedded SIM Karte oder als ein Teil einer Prozessorarchitektur ausgestaltet.

Gemäß einem dritten Aspekt betrifft die Erfindung ein Verfahren zur Steuerung einer Kommunikation zwischen einem gebäudeexternen Kommunikationsserver eines gebäudeexternen Kommunikationsnetzwerkes und einer gebäudeinternen Kommunikationsentität eines gebäudeinternen Kommunikationsnetzwerks, mit: Speichern von Authentifizierungsdaten zur Initiierung einer Kommunikationsverbindung zu dem gebäudeexternen Kommunikationsserver in einem Speicher eines Zugangsportals zur Steuerung der Kommunikation zwischen dem gebäudeexternen Kommunikationsserver und der gebäudeinternen Kommunikationsentität; Aufbau einer Kommunikation zu dem gebäudeexternen Kommunikationsserver durch das Zugangsportal unter Verwendung der gespeicherten Authentifizierungsdaten; und Aussenden der gespeicherten Authentifizierungsdaten durch das Zugangsportal an die gebäudeinterne Kommunikationsentität zur Initiierung einer Kommunikationsverbindung zwischen der gebäudeinternen Kommunikationsentität und dem gebäudeexternen Kommunikationsserver bei Störung der Kommunikationsverbindung zwischen dem Zugangsportal und dem gebäudeexternen Kommunikationsserver.

Dies hat den Vorteil, dass das Verfahren aufgrund des Speicherns der Authentifizierungsdaten zur Initiierung einer Kommunikationsverbindung zu dem Kommunikationsserver Flexibilität und Unabhängigkeit von den Gegebenheiten des Betriebssystems bietet. Durch das Speichern der Authentifizierungsdaten im Speicher des Zugangsportals kann die Kommunikationsverbindung flexibel von dem Zugangsportal auf die gebäudeinterne Kommunikationsentität umgestellt werden, falls die Kommunikationsverbindung zwischen Zugangsportal und Server ausfällt.

Gemäß einer Ausführungsform des Verfahrens ist das Zugangsportal ein Gateway, ein Hub oder ein Router.

Dies hat den Vorteil, dass diese Komponenten Standardkomponenten sind, die leicht ausgetauscht werden können.

Gemäß einem vierten Aspekt betrifft die Erfindung ein Verfahren zur Steuerung einer Kommunikation zwischen einem gebäudeexternen Kommunikationsserver eines gebäudeexternen Kommunikationsnetzwerkes und einer gebäudeinternen Kommunikationsentität eines gebäudeinternen Kommunikationsnetzwerks, mit: Speichern von Authentifizierungsdaten zur Initiierung einer Kommunikationsverbindung zu dem gebäudeexternen Kommunikationsserver in einem Speicher der gebäudeinternen Kommunikationsentität; Aufbau einer Kommunikation zu dem gebäudeexternen Kommunikationsserver durch die gebäudeinterne Kommunikationsentität unter Verwendung der gespeicherten Authentifizierungsdaten; und Aussenden der gespeicherten Authentifizierungsdaten durch die gebäudeinterne Kommunikationsentität an eine zweite Kommunikationsentität zur Initiierung einer Kommunikationsverbindung zwischen der zweiten Kommunikationsentität und dem gebäudeexternen Kommunikationsserver bei Störung der Kommunikationsverbindung zwischen der gebäudeinternen Kommunikationsentität und dem gebäudeexternen Kommunikationsserver.

Dies hat den Vorteil, dass das Verfahren aufgrund des Speicherns der Authentifizierungsdaten zur Initiierung einer Kommunikationsverbindung zu dem Kommunikationsserver Flexibilität und Unabhängigkeit von den Gegebenheiten des Betriebssystems bietet. Durch das Speichern der Authentifizierungsdaten im Speicher der gebäudeinternen Kommunikationsentität kann die Kommunikationsverbindung flexibel von der gebäudeinternen Kommunikationsentität auf eine andere gebäudeinterne Kommunikationsentität oder ein Steuerungsgerät, wie beispielsweise ein Smartphone umgestellt werden, falls die Kommunikationsverbindung zwischen gebäudeinterner Kommunikationsentität und Server ausfällt.

Gemäß einer Ausführungsform umfasst das Verfahren ein Aufbauen einer Kommunikationsverbindung zwischen der gebäudeinternen Kommunikationsentität und der zweiten Kommunikationsentität; und ein Steuern der gebäudeinternen Kommunikationsentität basierend auf der Kommunikationsverbindung zwischen der zweiten Kommunikationsentität und dem gebäudeexternen Kommunikationsserver und der Kommunikationsverbindung zwischen der zweiten Kommunikationsentität und der gebäudeinternen Kommunikationsentität durch den gebäudeexternen Kommunikationsserver.

Dies hat den Vorteil, dass die Kommunikationsverbindung flexibel über eine zweite Kommunikationsentität umrangiert, beispielsweise über ein Smartphone geleitet werden kann, falls die Kommunikationsverbindung zwischen gebäudeinterner Kommunikationsentität und Server ausfällt. Damit bietet ein solches Verfahren erhöhte Flexibilität und Ausfallsicherheit.

Gemäß einer Ausführungsform des Verfahrens ist die zweite Kommunikationsentität eine zweite gebäudeinterne Kommunikationsentität des gebäudeinternen Kommunikationsnetzwerks.

Gemäß einer Ausführungsform der gebäudeinternen Kommunikationsentität ist die zweite Kommunikationsentität eine zweite gebäudeinterne Kommunikationsentität des gebäudeinternen Kommunikationsnetzwerks ist.

Dies hat den Vorteil, dass bei solch einem Verfahren ein anderes Gerät, das im Gebäude verfügbar ist, den Kommunikationsaufbau übernehmen kann. Beispielsweise kann die Heizungssteuerung dann von der Kühlschranksteuerung mit übernommen werden. Dies erhöht die Flexibilität und Ausfallsicherheit des Verfahrens.

Gemäß einer Ausführungsform des Verfahrens ist die zweite Kommunikationsentität ein Steuergerät zum Steuern der gebäudeinternen Kommunikationsentität des gebäudeinternen Kommunikationsnetzwerks, insbesondere ein Smartphone, ein Mobiltelefon, ein TabletPC oder ein Kommunikationsgerät mit Funkadapter.

Dies hat den Vorteil, dass solche Steuergeräte leicht verfügbar sind, da mittlerweile fast jede Person über ein Smartphone, Mobiltelefon oder einen TabletPC verfügt. Das Gebäudeautomationssystem ist somit leicht zu steuern.

Weitere Ausführungsbeispiele werden Bezug nehmend auf die beiliegenden Zeichnungen erläutert. Es zeigen:
Fig. 1a eine schematische Darstellung zur Steuerung eines Gebäudeautomationsnetzes 102 gemäß einem Gateway-topologischen Ansatz mit Gateway 110;
Fig. 1b eine schematische Darstellung zur Steuerung eines Gebäudeautomationsnetzes 102 gemäß einem Gateway-topologischen Ansatz mit Hub 120;
Fig. 1c eine schematische Darstellung zur Steuerung eines Gebäudeautomationsnetzes 102 gemäß einem Server-topologischen Ansatz;
Fig. 2a eine schematische Darstellung zur Steuerung eines Gebäudeautomationsnetzes 102 gemäß einem Gateway-topologischen Ansatz mit Gateway 110 gemäß einer Ausführungsform der Erfindung;
Fig. 2b eine schematische Darstellung zur Steuerung eines Gebäudeautomationsnetzes 102 gemäß einem Gateway-topologischen Ansatz mit Hub 120 gemäß einer Ausführungsform der Erfindung;
Fig. 2c eine schematische Darstellung zur Steuerung eines Gebäudeautomationsnetzes 102 gemäß einem Server-topologischen Ansatz gemäß einer Ausführungsform der Erfindung;
Fig. 3 eine schematische Darstellung zur Steuerung eines Gebäudeautomationsnetzes 102 gemäß einem Gateway-topologischen Ansatz mit Gateway 110, bei der eine gebäudeinterne Kommunikationsentität 111 die Verbindung zu dem Server 108 übernimmt, gemäß einer Ausführungsform der Erfindung;
Fig. 4 eine schematische Darstellung zur Steuerung eines Gebäudeautomationsnetzes 102 gemäß einem Gateway-topologischen Ansatz mit Hub 120, bei der der Hub 120 die Verbindung zu dem Server 108 übernimmt, gemäß einer Ausführungsform der Erfindung;
Fig. 5 eine schematische Darstellung eines Verfahrens 500 zur Steuerung einer Kommunikation zwischen einem gebäudeexternen Kommunikationsserver eines gebäudeexternen Kommunikationsnetzwerkes und einer gebäudeinternen Kommunikationsentität eines gebäudeinternen Kommunikationsnetzwerks gemäß einer Ausführungsform der Erfindung; und
Fig. 6 eine schematische Darstellung eines Verfahrens 600 zur Steuerung einer Kommunikation zwischen einem gebäudeexternen Kommunikationsserver eines gebäudeexternen Kommunikationsnetzwerkes und einer gebäudeinternen Kommunikationsentität eines gebäudeinternen Kommunikationsnetzwerks gemäß einer weiteren Ausführungsform der Erfindung.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

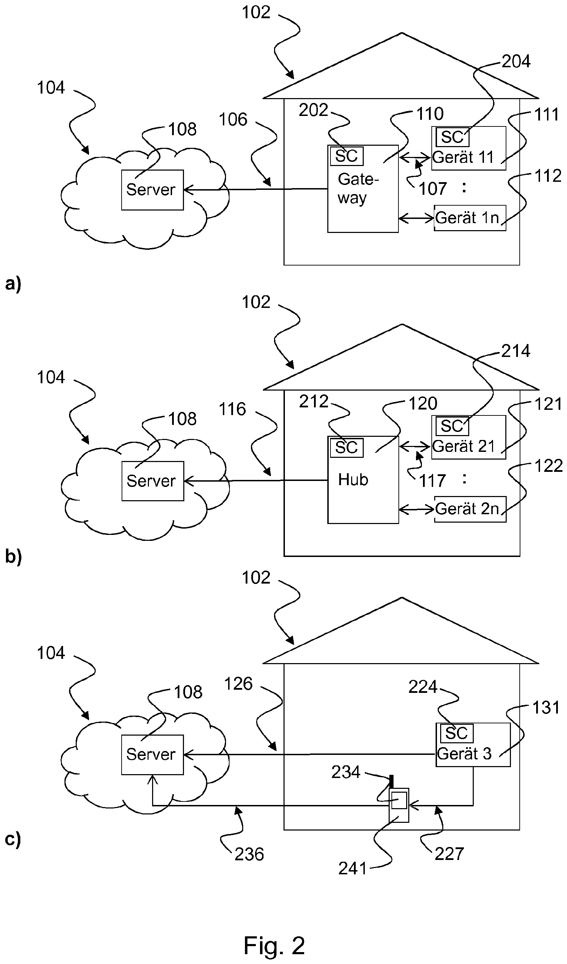

Die Figuren 2a, 2b und 2c zeigen eine Zusammenschau der einzelnen Topologien. Fig. 2a zeigt eine Topologie mit einem Gateway, welches im Fall des Ausfalls der Internet-Verbindung Funktionen des Backendservers auf lokaler Ebene vollständig übernehmen kann. Fig. 2b zeigt eine Topologie mit einem Hub, welcher im Fall des Ausfalls der Internet-Verbindung Teilfunktionen des Backendservers auf lokaler Ebene übernehmen kann. Fig. 1c zeigt eine Topologie in der ein Gerät in direkter Verbindung mit dem Backendserver steht, welches im Fall des Ausfalls der Internet-Verbindung keine Funktionen des Backendservers auf lokaler Ebene vorhält.

Fig. 2a ist eine schematische Darstellung zur Steuerung eines Gebäudeautomationsnetzes 102 gemäß einem Gateway-topologischen Ansatz mit Gateway 110 gemäß einer Ausführungsform der Erfindung.

Die Fig. 2a zeigt ein Zugangsportal 110, beispielsweise ein Gateway, zur Steuerung einer Kommunikation zwischen einem gebäudeexternen Kommunikationsserver 108 eines gebäudeexternen Kommunikationsnetzwerkes 104, beispielsweise das Internet, und einer oder mehreren gebäudeinternen Kommunikationsentitäten 111, 112 eines gebäudeinternen Kommunikationsnetzwerks 102, beispielsweise ein Gebäudeautomatisierungsnetz. Das Zugangsportal 110 umfasst einen Software Container oder allgemein bezeichnet einen Speicher 202 zum Speichern von Authentifizierungsdaten zur Initiierung einer Kommunikationsverbindung zu dem Kommunikationsserver 108 des gebäudeexternen Kommunikationsnetzwerks 104. Das Zugangsportal 110 umfasst eine erste Kommunikationsschnittstelle 106 zum Aufbau einer Kommunikation zu dem gebäudeexternen Kommunikationsserver 108 unter Verwendung der gespeicherten Authentifizierungsdaten. Die erste Kommunikationsschnittstelle 106 ist ausgebildet, die Kommunikationsverbindung zu dem gebäudeexternen Kommunikationsserver 108 zu überwachen und bei Störung der Kommunikationsverbindung eine Störmeldung zu erzeugen. Das Zugangsportal 110 umfasst eine zweiten Kommunikationsschnittstelle 107 zum Kommunizieren mit der einen oder mehreren gebäudeinternen Kommunikationsentitäten 111, 112. Die zweite Kommunikationsschnittstelle 107 ist ausgebildet, ansprechend auf einen Empfang der Störmeldung die gespeicherten Authentifizierungsdaten zur Initiierung einer Kommunikationsverbindung zwischen einer der gebäudeinternen Kommunikationsentitäten 111, 112 und dem gebäudeexternen Kommunikationsserver 108 an die entsprechende gebäudeinterne Kommunikationsentität 111, 112 auszusenden.

In diesem Fall kann sowohl das Gateway 110 als auch ein ausgewähltes Gerät 111, welches z.B. einen Mobilfunk-Sender enthält (nicht dargestellt in Fig. 2a), mit einem Software Container SC 202 ausgestattet sein. Sollte nun die Internet-Verbindung 106 zwischen Gateway 110 und Server 108 ausfallen, können alle Verbindungen auf das Mobilfunkgerät umgestellt werden, und das Gerät 111 kann dann über Mobilfunk eine Verbindung zum Server 108 aufnehmen.

Der Softwarecontainer 202 kann verwendet werden, um die Mobilfunk Zugangsdaten bereitzustellen und Komponenten der Betriebssoftware des Gateways 110. Weil in diesem Fall wahrscheinlich ist, dass die Bandbreite nicht ausreicht, um einen vollständigen Datenverkehr zwischen Backend-Server 108 und Home Gateway 110 vorzunehmen, können alle lokalen Komponenten bevorzugt autonom über das Gateway 110 gesteuert werden. Lediglich einige Fernsteuerungen von Komponenten brauchen vom Backendserver 108 über das Gerät 111 gesteuert werden, so dass Datenverkehr eingespart werden kann.

Der Speicher 202 kann Parameter zum Steuern der gebäudeinternen Kommunikationsentität 111, 112 speichern. Die zweite Kommunikationsschnittstelle 107 kann ansprechend auf den Empfang der Störmeldung die gespeicherten Parameter zum Steuern der gebäudeinternen Kommunikationsentität 111, 112 an die gebäudeinterne Kommunikationsentität 111, 112 aussenden.

Der Speicher 202 kann Programme zum Steuern der gebäudeinternen Kommunikationsentität 111, 112 speichern. Die zweite Kommunikationsschnittstelle 107 kann ansprechend auf den Empfang der Störmeldung die gespeicherten Programme zum Steuern der gebäudeinternen Kommunikationsentität 111, 112 an die gebäudeinterne Kommunikationsentität 111, 112 aussenden. Die Programme zum Steuern der gebäudeinternen Kommunikationsentität 111, 112 können in Form einer Skript-Sprache realisiert sind.

Das Zugangsportal 110 kann ferner einen Prozessor umfassen, der Steuerungsaufgaben zur Steuerung der gebäudeinternen Kommunikationsentität 111, 112 unter Nutzung der zweiten Kommunikationsschnittstelle 107 ausführen kann. Der Prozessor kann ferner ausgebildet sein, nach dem Aussenden der gespeicherten Authentifizierungsdaten an die gebäudeinterne Kommunikationsentität 111, 112 zumindest einen Teil der Steuerungsaufgaben weiterhin auszuführen.

Der Prozessor kann ausgelegt sein, den anderen Teil der Steuerungsaufgaben, der von dem Prozessor nicht mehr ausgeführt wird in Form von Programmen auf dem Speicher 202 abzulegen.

Beispielsweise kann der zumindest eine Teil der Steuerungsaufgaben, der von dem Prozessor weiterhin ausgeführt wird, die zweite Kommunikationsschnittstelle 107 stärker belasten als der andere Teil der Steuerungsaufgaben, der von dem Prozessor nicht mehr ausgeführt wird. Der zumindest eine Teil der Steuerungsaufgaben, der von dem Prozessor weiterhin ausgeführt wird, kann beispielsweise lokale Steuerungsaufgaben umfassen. Der andere Teil der Steuerungsaufgaben, der von dem Prozessor nicht mehr ausgeführt wird, kann beispielsweise Fernsteuerungsaufgaben umfassen.

Das Zugangsportal 110 kann ein Gateway sein, wie in Fig. 2a dargestellt. Es kann ein Hub 120 sein, wie in Fig. 2b dargestellt, oder es kann ein Router sein.

Die gebäudeinterne Kommunikationsentität 111, 112 kann ein steuerbarer Aktor sein, beispielsweise ein Stellglied für Heizung, Jalousien, Alarmanlage, Türschloss, Lichtschalter, Herd, Kühlschrank, Waschmaschine, Kaffeemaschine, Geschirrspülmaschine. Die gebäudeinterne Kommunikationsentität 111, 112 kann ein steuerbarer Sensor sein, beispielsweise ein Temperaturfühler, ein Drucksensor, ein Lichtsensor, eine Lichtschranke, eine Uhr oder Armbanduhr oder eine Brille mit Sensorfunktion.

In einem Ausführungsbeispiel kann die Armbanduhr erkennen, ob der Mensch schlafen gegangen ist, beispielsweise durch Temperaturfühler ein Absinken der Temperatur unter einen vorgegebenen Schwellwert, z:B. von 30 bis 40 Grad Celsius, bestimmen und daran erkennen, dass die Armbanduhr sich nicht mehr am Körper des Menschen befindet. In diesem Fall kann die Armbanduhr ein Ausschalten des Lichts im Gebäude veranlassen, evtl. ein Absenken der Heizung auf Nachtabschaltung veranlassen, die Rolläden schließen oder die Jalousien im Haus oder Gebäude herunterlassen. Die gleichen Steuerungsaufgaben kann auch eine Brille mit Sensorfunktion ausführen. Beispielsweise kann eine Kamera, die in die Brille integriert ist oder an der Brille angebracht ist, erkennen, ob der Mensch schlafen gegangen ist, z.B. wenn die Brille an einer Stelle abgelegt wurde und sich die aufgenommene Bildsequenz nicht mehr ändert oder wenn sie in den Energiesparmodus geschaltet wurde. Auch die Brille kann mit Temperatursensor ausgestattet sein, um die Körpertemperatur des Menschen zu messen und bei Abfall unterhalb eines Schwellwerts das Gebäude in den "Schlafzustand" zu bringen.

Die Logik zu erkennen, ob die Temperatur abgefallen ist und dann die geeigneten Maßnahmen zu treffen muss nicht auf der gebäudeinternen Kommunikationsentität wie beispielsweise der Armbanduhr oder der Brille realisiert sein. Es kann ausreichend sein, wenn die Armbanduhr oder Brille lediglich als Sensor dient, der die Temperaturdaten erfasst. Die weitere Steuerungslogik dazu kann auf dem Gateway 110, im Server 108 oder sogar in der Cloud realisiert sein. Die Steuerungslogik kann auf einem Software Container realisiert sein, der bei Ausfall der entsprechenden Verbindung an ein weiteres Gerät weitergegeben werden kann, das dann bei Erhalt der Temperaturdaten die kompletten Steuerungsaufgaben des Gebäudes in diesem Kontext ("Schlafzustand" des Gebäudes) übernehmen kann.

Das Gebäudeautomationssystem kann selbst entscheiden, wo es die Logik zur Steuerung der einzelnen gebäudeinternen Kommunikationsentitäten vorhält. Wenn sich das Gateway 110 besser dazu eignet, kann die Steuerungslogik auf dem Gateway 110 vorgehalten werden. Eignet sich der Server 108 besser dazu, dann kann die Steuerungslogik auf dem Server 108 implementiert werden. Eignet sich die gebäudeinterne Kommunikationsentität 111, 112 besser dazu, dann kann die Steuerungslogik auf der gebäudeinternen Kommunikationsentität vorgehalten werden. Die Übertragung der Steuerungslogik kann über Software Container bzw. Speicher 202, 204 vorgenommen werden. Es ist somit nicht erforderlich, dass bei der Installation der Komponenten des Gebäudeautomationssystems eine Festlegung erfolgt, auf welchen Komponenten des Systems welche Logik ausgeführt wird, sondern es ist flexibel möglich während des Betriebs des Gebäudeautomationssystems zu entscheiden, welche Logik auf welcher Komponente auszuführen ist im Sinne einer optimalen Arbeitsweise des Gebäudeautomationssystems bzgl. Ressourcenschonung, Stabilität, Betriebssicherheit, Robustheit, Reaktionszeit, Flexibilität, Bequemlichkeit und weiterer Parameter.

Die Übertragung der Steuerungslogik von einer Netzwerkentität zu einer anderen ist auch nicht notwendigerweise daran geknüpft, dass eine Kommunikationsverbindung ausfällt. Sie kann auch bei funktionierenden Kommunikationsverbindungen vorgenommen werden aus der Motivation heraus, eine flexible Zuordnung der Steuerungsaufgaben zu den jeweils geeigneten Geräten, also beispielsweise Gateway 110, Hub 120, Kommunikationsserver 108 und gebäudeinterne Kommunikationsentität 111, 112 zu schaffen. Das hier Gesagte gilt natürlich auch für die unten in den Figuren 2b, 2c, 3 und 4 beschriebenen weiteren Ausführungsformen.

Die zweite Kommunikationsschnittstelle 107 kann eine Nahbereichsschnittstelle sein, beispielsweise eine Bluetooth-Schnittstelle, eine Infrarot-Schnittstelle, eine WiFi-Schnittstelle, eine WLAN Schnittstelle, eine NFC-Schnittstelle, eine USB-Schnittstelle oder eine lokaler Feldbus.

Die erste Kommunikationsschnittstelle 106 kann eine Weitverkehrsschnittstelle sein, die ausfallen kann. In diesem Fall ist es dann möglich, die Authentifizierungsdaten auf eine gebäudeinterne Kommunikationsentität zu übertragen und durch diese eine Ersatzkommunikationsverbindung zum Server 108 aufbauen zu lassen.

Der Server 108 kann an beliebiger Stelle in der Cloud vorgesehen sein, d.h. der Server 108 kann dynamisch an den Bedarf angepasst werden oder über ein Netzwerk zur Verfügung gestellt werden. Definierte technische Schnittstellen und Protokolle können Angebot und Nutzung des Servers 108 definieren.

Der Server 108 kann hierarchisch strukturiert sein, d.h. mehrere Sub-Server können über jeweilige zweite Kommunikationsschnittstellen 106, 116 eine entsprechende Verbindung zum Zugangsportal 110, 120 aufbauen. Einige Steuerungs- und Authentifizierungsaufgaben können von den Sub-Servern ausgeführt werden, andere übergeordnete Steuerungs- und Authentifizierungsaufgaben werden dagegen von dem übergeordneten Server ausgeführt. Beispielsweise im Szenario eines Mehrparteienhaushaltes oder einer Wohnungsbaugesellschaft können mehrere gebäudeinterne Kommunikationsnetze 102 innerhalb eines gemeinsamen Gebäudes oder Gebäudekomplexes vorhanden sein, die jeweils eine Kommunikation zu einem ihnen zugeordneten (Sub)-Server 108 aufnehmen, der dann seinerseits die Kommunikation an seinen übergeordneten Server weiterleitet. Die mehreren Parteien müssen hier nicht im selben Gebäude angesiedelt sein, sie können auch verschiedene Gebäude bewohnen. Im Falle des Mehrparteienhaushaltes können aber auch einige oder alle der Parteien auf ein gemeinsames Zugangsportal zugreifen, so dass diese Teilparteien ein gemeinsames gebäudeinternes Kommunikationsnetz bilden.

Der Software Container kann in Form einer SIM Karte oder einer UICC Karte realisiert sein. Die SIM Karte kann als Embedded SIM Karte oder als ein Teil einer Prozessorarchitektur ausgestaltet sein. Es versteht sich, dass diese Realisierung des Software Containers in allen hier beschriebenen Konfigurationen auftreten kann.

Fig. 2b zeigt eine schematische Darstellung zur Steuerung eines Gebäudeautomationsnetzes 102 gemäß einem Gateway-topologischen Ansatz mit Hub 120 gemäß einer Ausführungsform der Erfindung.

In diesem Fall verhält sich der Verbindungsaufbau mit dem eingesetzten Software Container 212 ähnlich wie in dem oben genannten Fall des Gateways 110 (siehe Figur 2a). Anstatt der zwei Geräte 111 und 112 sind die beiden Geräte 121 und 122 über die zweite Kommunikationsschnittstelle 117 mit dem Hub 120 verbunden. Der Hub hat eine erste Kommunikationsschnittstelle 116 zur Herstellung einer Kommunikation mit dem Server 108 im gebäudeexternen Kommunikationsnetz 104.

Der Unterschied zwischen dem Hub 120 und dem Gateway 110 besteht darin, dass der Hub 120 wesentlich einfacher ausgestattet sein kann als das Gateway 110. So könnte es sein, dass eine Übernahme der lokalen Komponenten durch den Hub 120 aufgrund einer einfachen Bauweise nicht möglich ist, so dass beispielsweise eine Netzwerkverbindung über ein Gerät 121 mit Mobilfunkanbindung (nicht dargestellt in Fig. 2b) hergestellt werden muss. In diesem Fall sollte der Software Container 214 in dem Gerät 121 vorgesehen sein. Er kann virtuell als Software Container 214 in der Betriebssoftware oder in der emulierten SIM Karte für ein Mobilfunkgerät bereit gehalten werden, so dass im Einsatzfall das Gerät 121 Funktionen des Hub 120 übernehmen kann, wie beispielsweise die Herstellung der Verbindung zum Server 108.

Fig. 2c zeigt eine schematische Darstellung zur Steuerung eines Gebäudeautomationsnetzes 102 gemäß einem Server-topologischen Ansatz gemäß einer Ausführungsform der Erfindung.

In Fig. 2c ist eine gebäudeinterne Kommunikationsentität 131, beispielsweise ein steuerbarer Aktor oder ein steuerbarer Sensor eines gebäudeinternen Kommunikationsnetzwerks 102, beispielsweise eines Gebäudeautomationsnetzes dargestellt. Die gebäudeinterne Kommunikationsentität 131 umfasst einen Software Container oder allgemein gesprochen einen Speicher 224 zum Speichern von Authentifizierungsdaten zur Initiierung einer Kommunikationsverbindung zu einem Kommunikationsserver 108 eines gebäudeexternen Kommunikationsnetzwerks 104, der die gebäudeinterne Kommunikationsentität 131 steuert.

Die gebäudeinterne Kommunikationsentität 131 umfasst eine erste Kommunikationsschnittstelle 126 zum Aufbau einer Kommunikation zu dem gebäudeexternen Kommunikationsserver 108 unter Verwendung der gespeicherten Authentifizierungsdaten, wobei die erste Kommunikationsschnittstelle 126 ausgebildet ist, die Kommunikationsverbindung zu dem gebäudeexternen Kommunikationsserver 108 zu überwachen und bei Störung der Kommunikationsverbindung eine Störmeldung zu erzeugen.

Die gebäudeinterne Kommunikationsentität 131 umfasst eine zweite Kommunikationsschnittstelle 227 zum Kommunizieren mit einer zweiten Kommunikationsentität 241, beispielsweise eine zweite gebäudeinterne Kommunikationsentität (nicht dargestellt) oder ein Steuergerät zum Steuern der gebäudeinternen Kommunikationsentität 131, z.B. ein Smartphone (in Fig. 2a dargestellt). Die zweite Kommunikationsschnittstelle 227 ist ausgebildet, ansprechend auf einen Empfang der Störmeldung die gespeicherten Authentifizierungsdaten zur Initiierung einer Kommunikationsverbindung 236 zwischen der zweiten Kommunikationsentität 241 und dem gebäudeexternen Kommunikationsserver 108 an die zweite Kommunikationsentität 241 auszusenden.

Die gebäudeinterne Kommunikationsentität 131 kann einen Prozessor aufweisen, der ausgelegt sein kann, über die zweite Kommunikationsschnittstelle 227 eine Kommunikationsverbindung zu der zweiten Kommunikationsentität 241 aufzubauen, um die gebäudeinterne Kommunikationsentität 131 basierend auf der Kommunikationsverbindung 236 zwischen der zweiten Kommunikationsentität 241 und dem gebäudeexternen Kommunikationsserver 108 durch den gebäudeexternen Kommunikationsserver 108 zu steuern.

In dem Fall, dass ohne ein Zugangsportal wie Gateway 110 oder Hub 120 (wie in Fig. 2a und 2b gezeigt) eine gebäudeinterne Kommunikationsentität 131 wie beispielsweise ein Haushaltsgerät in direkter Verbindung mit dem Server 108 steht, und die Internet-Verbindung 126 ausfällt, kann das Gerät 131 seine Autorisierungsdaten an ein anderes Gerät 241 in der Nähe übertragen, indem diese Daten in den Software Container 234 des benachbarten Gerätes 241 übertragen werden, und dann die Internet-Verbindung 236 über ein anderes ausfallsicheres Ersatzmedium 241 wiederaufgenommen wird. Dabei können auch im Haushalt befindliche Smartphones 241 verwendet werden (wie in Fig. 2c dargestellt), so dass eine Diversifizierung des Netzzuganges ermöglicht wird. Es können auch WLAN-Netze des gleichen Internet Service Providers verwendet werden, sofern beispielsweise eine Trennung der Daten gegeben ist, und die Kapazitäten ausreichend sind. Zudem kann der Software Container 224 auch als Zwischenspeicher für Daten verwendet werden. So können zum Beispiel Wetterdaten abgespeichert werden, um eine Heizung zu steuern. Auch im Fall des Ausfalls des Internets wären dann solche Daten lokal vorhanden, um einen Ausfallzeitraum zu überbrücken. Bei Wiedereinsetzen der Internet-Verbindung 126 kann dieser Software Container 224 dann aktualisiert werden.

Die die Kommunikationsverbindung zwischen der zweiten Kommunikationsentität 131 und dem gebäudeexternen Kommunikationsserver 108 kann beispielsweise eine Mobilfunkverbindung 236 umfassen (wie in Fig. 2c dargestellt).

Die zweite Kommunikationsentität 241 kann auch eine zweite gebäudeinterne Kommunikationsentität des gebäudeinternen Kommunikationsnetzwerks 102 sein (nicht dargestellt in Fig. 2c). Die zweite Kommunikationsentität 241 kann ein Steuergerät zum Steuern der gebäudeinternen Kommunikationsentität 131 sein, beispielsweise ein Smartphone (wie in Fig. 2c dargestellt), ein Mobiltelefon, ein TabletPC oder ein Kommunikationsgerät mit Funkadapter.

Der Speicher 224 kann Parameter zum Steuern der gebäudeinternen Kommunikationsentität 131 speichern. Die zweite Kommunikationsschnittstelle 227 kann ansprechend auf den Empfang der Störmeldung die gespeicherten Parameter zum Steuern der gebäudeinternen Kommunikationsentität 131 an die zweite Kommunikationsentität 241 aussenden.

Der Speicher 224 kann ferner ausgelegt sein, Programme zum Steuern der gebäudeinternen Kommunikationsentität 131 zu speichern. Die zweite Kommunikationsschnittstelle 227 kann ansprechend auf den Empfang der Störmeldung die gespeicherten Programme zum Steuern der gebäudeinternen Kommunikationsentität 131 an die zweite Kommunikationsentität 241 aussenden. Die Programme zum Steuern der gebäudeinternen Kommunikationsentität 131 können beispielsweise in Form einer Skript-Sprache realisiert sein.

Die gebäudeinterne Kommunikationsentität 131 kann beispielsweise ein steuerbarer Aktor sein, beispielsweise ein Stellglied für Heizung, Jalousien, Alarmanlage, Türschloss, Lichtschalter, Herd, Kühlschrank, Waschmaschine, Kaffeemaschine, Geschirrspülmaschine. Die gebäudeinterne Kommunikationsentität 131 kann beispielsweise ein steuerbarer Sensor sein, beispielsweise ein Temperaturfühler, ein Drucksensor, ein Lichtsensor oder eine Lichtschranke.

Die zweite Kommunikationsschnittstelle 227 kann eine Nahbereichsschnittstelle sein, beispielsweise eine Bluetooth-Schnittstelle, eine Infrarot-Schnittstelle, eine WiFi-Schnittstelle, eine WLAN Schnittstelle, eine NFC-Schnittstelle oder eine USB-Schnittstelle.

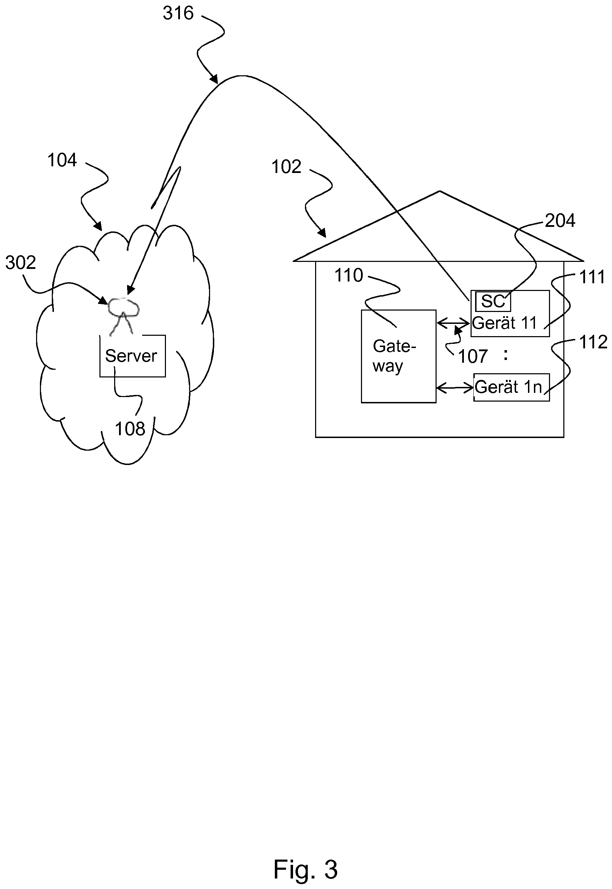

Fig. 3 zeigt eine schematische Darstellung zur Steuerung eines Gebäudeautomationsnetzes 102 gemäß einem Gateway-topologischen Ansatz mit Gateway 110, bei der eine gebäudeinterne Kommunikationsentität 111 die Verbindung zu dem Server 108 übernimmt, gemäß einer Ausführungsform der Erfindung.

Dieses Szenario Fall entspricht dem oben beschriebenen Szenario der Figur 2a. Bei Ausfall der Internet-Verbindung 106 kann ein mit dem Software Container bzw. Speicher 204 ausgestattetes Gerät 111 kann die Verbindung 316 zum Backend-Server 108 übernehmen, wenn dieser Server 108 über einen Mobilfunk-Adapter 302 verfügt.

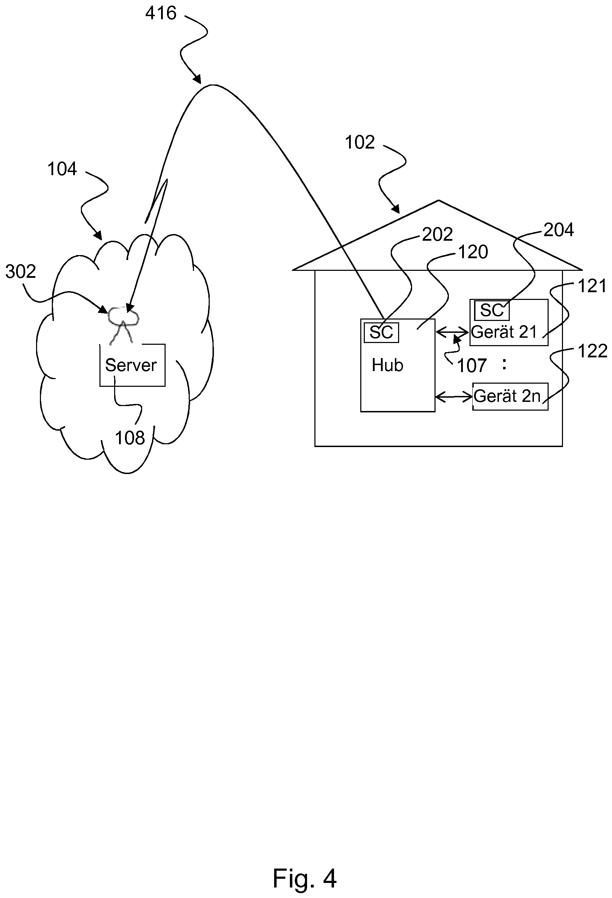

Fig. 4 zeigt eine schematische Darstellung zur Steuerung eines Gebäudeautomationsnetzes 102 gemäß einem Gateway-topologischen Ansatz mit Hub 120, bei der der Hub 120 die Verbindung zu dem Server 108 übernimmt, gemäß einer Ausführungsform der Erfindung.

Dieses Szenario Fall ist ähnlich dem oben beschriebenen Szenario der Figur 2b. Allerdings kann bei diesem Fallback-Szenario der Hub 120 eine Verbindung über Funk 416 zum Server 108 aufbauen anstatt der üblichen breitbandigen, drahtgebundenen Verbindung 116 wie in Fig. 2b dargestellt. Der Software Container bzw. Speicher 202 kann hier zur Übertragung von lokalen Diensten oder von Authentifizierungsdaten in den Geräten 121, 122 des gebäudeinternen Netzwerks 102 dienen.

In dem Szenario eines Heimautomationssystems der Fig. 4 kann die Heizungssteuerung die Funktionalität des Hub 120 für einen Teilbereich der Geräte 121, 122 in dem gebäudeinternen Kommunikationsnetzwerk 102 bzw. Heimautomationsnetz übernehmen, zum Beispiel für die Heizungsthermostate, und kann für diesen Teilbereich direkt mit dem Backend-Server 108 im Internet 104 kommunizieren. Im Falle, dass die Internetverbindung unterbrochen wird, kann die Heizungssteuerung auf dem Software Container 204 auf ein Mobilfunkgerät zugreifen und seine Zugangsdaten auf dieses Gerät, welches über eine Mobilfunkverbindung oder eine andere Form von unterbrechungsfreier Internet-Verbindung verfügt, übertragen. Die Heizungssteuerung kann den Software Container 204 auf dieses Gerät übertragen und sich über dieses Gerät dann mit dem Internet verbinden. Sobald die reguläre Internet-Verbindung wieder aufgenommen wird, können die Zugangsdaten wieder auf die Heizungssteuerung übertragen werden.

Alternativ kann in dem Software Container 204 auch eine Anweisung an die Heizungssteuerung hinterlegt sein, dass sie im Falle des Ausfalls der Internetverbindung in den autonomen, lokalen Betrieb übergeht, so dass ein unterbrechungsfreier Betrieb der Heizung des Hauses möglich ist bis die Internet-Verbindung wiederhergestellt wird.

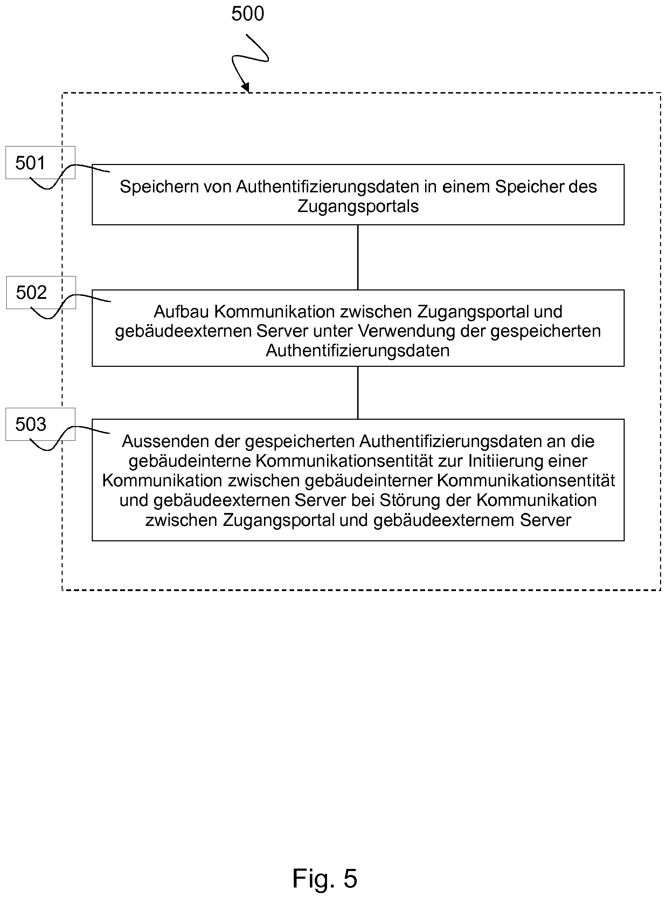

Fig. 5 zeigt eine schematische Darstellung eines Verfahrens 500 zur Steuerung einer Kommunikation zwischen einem gebäudeexternen Kommunikationsserver eines gebäudeexternen Kommunikationsnetzwerkes, beispielsweise einem Kommunikationsserver 108 wie in den Figuren 2 bis 4 beschrieben, und einer gebäudeinternen Kommunikationsentität, beispielsweise einem steuerbaren Aktor oder einem steuerbaren Sensor wie in den Figuren 2 bis 4 beschrieben, eines gebäudeinternen Kommunikationsnetzwerks, beispielsweise eines Gebäudeautomationsnetzes gemäß einer Ausführungsform der Erfindung.

Das Verfahren 500 umfasst ein Speichern 501 von Authentifizierungsdaten zur Initiierung einer Kommunikationsverbindung zu dem gebäudeexternen Kommunikationsserver in einem Speicher eines Zugangsportals, beispielsweise eines Gateways 110 oder eines Hubs 120 wie in den Figuren 2a, 2b, 3 und 4 beschrieben, zur Steuerung der Kommunikation zwischen dem gebäudeexternen Kommunikationsserver und der gebäudeinternen Kommunikationsentität, beispielsweise einem Software Container 204, 214 wie in den Figuren 2a, 2b, 3 und 4 beschrieben.

Das Verfahren 500 umfasst ein Aufbauen 502 einer Kommunikation zu dem gebäudeexternen Kommunikationsserver durch das Zugangsportal unter Verwendung der gespeicherten Authentifizierungsdaten.

Das Verfahren 500 umfasst ein Aussenden 503 der gespeicherten Authentifizierungsdaten durch das Zugangsportal an die gebäudeinterne Kommunikationsentität zur Initiierung einer Kommunikationsverbindung zwischen der gebäudeinternen Kommunikationsentität und dem gebäudeexternen Kommunikationsserver bei Störung der Kommunikationsverbindung zwischen dem Zugangsportal und dem gebäudeexternen Kommunikationsserver.

Das Zugangsportal kann ein Gateway, ein Hub oder ein Router sein, wie in den Figuren 2a, 2b, 3 und 4 beschrieben.

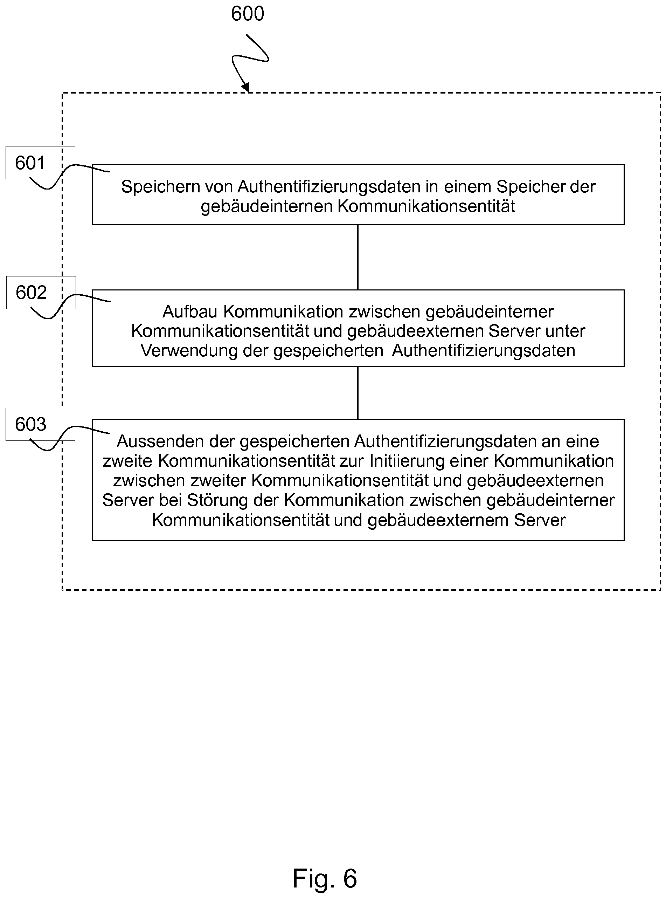

Fig. 6 zeigt eine schematische Darstellung eines Verfahrens 600 zur Steuerung einer Kommunikation zwischen einem gebäudeexternen Kommunikationsserver eines gebäudeexternen Kommunikationsnetzwerkes, beispielsweise einem Kommunikationsserver 108 wie in den Figuren 2 bis 4 beschrieben, und einer gebäudeinternen Kommunikationsentität, beispielsweise einem steuerbaren Aktor oder einem steuerbaren Sensor wie in den Figuren 2 bis 4 beschrieben, eines gebäudeinternen Kommunikationsnetzwerks, beispielsweise eines Gebäudeautomationsnetzes gemäß einer weiteren Ausführungsform der Erfindung.

Das Verfahren 600 umfasst ein Speichern 601 von Authentifizierungsdaten zur Initiierung einer Kommunikationsverbindung zu dem gebäudeexternen Kommunikationsserver in einem Speicher der gebäudeinternen Kommunikationsentität, beispielsweise einem Software Container 224 wie in Figur 2c beschrieben.

Das Verfahren 600 umfasst ein Aufbauen 602 einer Kommunikation zu dem gebäudeexternen Kommunikationsserver durch die gebäudeinterne Kommunikationsentität unter Verwendung der gespeicherten Authentifizierungsdaten.

Das Verfahren 600 umfasst ein Aussenden 603 der gespeicherten Authentifizierungsdaten durch die gebäudeinterne Kommunikationsentität an eine zweite Kommunikationsentität, beispielsweise ein Smartphone 241 wie in Fig. 2c beschrieben, zur Initiierung einer Kommunikationsverbindung zwischen der zweiten Kommunikationsentität und dem gebäudeexternen Kommunikationsserver bei Störung der Kommunikationsverbindung zwischen der gebäudeinternen Kommunikationsentität und dem gebäudeexternen Kommunikationsserver, beispielsweise einer Mobilfunkverbindung 236 zwischen dem Smartphone 241 und dem Server 108, wie in Fig. 2c beschrieben.

Das Verfahren 600 kann ein Aufbauen einer Kommunikationsverbindung 227 zwischen der gebäudeinternen Kommunikationsentität 131 und der zweiten Kommunikationsentität 241 umfassen. Das Verfahren 600 kann ein Steuern der gebäudeinternen Kommunikationsentität basierend auf der Kommunikationsverbindung 236 zwischen der zweiten Kommunikationsentität 241 und dem gebäudeexternen Kommunikationsserver 108 und der Kommunikationsverbindung 227 zwischen der zweiten Kommunikationsentität 241 und der gebäudeinternen Kommunikationsentität 131 durch den gebäudeexternen Kommunikationsserver 108 umfassen.

Die zweite Kommunikationsentität 241 kann eine zweite gebäudeinterne Kommunikationsentität des gebäudeinternen Kommunikationsnetzwerks sein. Die zweite Kommunikationsentität 241 kann ein Steuergerät 241 zum Steuern der gebäudeinternen Kommunikationsentität 131 des gebäudeinternen Kommunikationsnetzwerks sein (wie in Fig. 2c dargestellt), insbesondere ein Smartphone, ein Mobiltelefon, ein TabletPC oder ein Kommunikationsgerät mit Funkadapter.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 5 oder Fig. 6 beschriebene Verfahren 500, 600 ausgeführt werden kann, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, Authentifizierungsdaten zur Initiierung einer Kommunikationsverbindung zu dem gebäudeexternen Kommunikationsserver in einem Speicher eines Zugangsportals zur Steuerung der Kommunikation zwischen dem gebäudeexternen Kommunikationsserver und der gebäudeinternen Kommunikationsentität zu speichern 501; eine Kommunikation zu dem gebäudeexternen Kommunikationsserver durch das Zugangsportal unter Verwendung der gespeicherten Authentifizierungsdaten aufzubauen 502; und die gespeicherten Authentifizierungsdaten durch das Zugangsportal an die gebäudeinterne Kommunikationsentität zur Initiierung einer Kommunikationsverbindung zwischen der gebäudeinternen Kommunikationsentität und dem gebäudeexternen Kommunikationsserver bei Störung der Kommunikationsverbindung zwischen dem Zugangsportal und dem gebäudeexternen Kommunikationsserver auszusenden 503.

Das Computerprogrammprodukt kann ferner folgendes umfassen: computerlesbare Programmittel, die einen Computer veranlassen, Authentifizierungsdaten zur Initiierung einer Kommunikationsverbindung zu dem gebäudeexternen Kommunikationsserver in einem Speicher der gebäudeinternen Kommunikationsentität zu speichern 601; eine Kommunikation zu dem gebäudeexternen Kommunikationsserver durch die gebäudeinterne Kommunikationsentität unter Verwendung der gespeicherten Authentifizierungsdaten aufzubauen 602; und die gespeicherten Authentifizierungsdaten durch die gebäudeinterne Kommunikationsentität an eine zweite Kommunikationsentität zur Initiierung einer Kommunikationsverbindung zwischen der zweiten Kommunikationsentität und dem gebäudeexternen Kommunikationsserver bei Störung der Kommunikationsverbindung zwischen der gebäudeinternen Kommunikationsentität und dem gebäudeexternen Kommunikationsserver auszusenden 603.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem gebäudeinternen Kommunikationsnetzwerk oder in einem gebäudeexternen Kommunikationsnetzwerk wie in den Figuren 1 bis 4 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 102:: gebäudeinternes Kommunikationsnetz, Gebäudeautomationsnetz
- 104:: gebäudeinternes Kommunikationsnetz, Internet
- 106:: erste Kommunikationsschnittstelle
- 107:: zweite Kommunikationsschnittstelle
- 108:: gebäudeexterner Kommunikationsserver, Authentifizierungsserver
- 110:: Zugangsportal, Gateway
- 111:: gebäudeinterne Kommunikationsentität, steuerbarer Sensor oder Aktor
- 112:: gebäudeinterne Kommunikationsentität, steuerbarer Sensor oder Aktor
- 116:: erste Kommunikationsschnittstelle
- 117:: zweite Kommunikationsschnittstelle
- 120:: Zugangsportal, Hub
- 121:: gebäudeinterne Kommunikationsentität, steuerbarer Sensor oder Aktor
- 122:: gebäudeinterne Kommunikationsentität, steuerbarer Sensor oder Aktor
- 126:: erste Kommunikationsschnittstelle
- 131:: gebäudeinterne Kommunikationsentität, steuerbarer Sensor oder Aktor

- 202:: Speicher, Software Container, auf Gateway
- 204:: Speicher, Software Container, auf gebäudeinterner Kommunikationsentität
- 212:: Speicher, Software Container, auf Hub
- 214:: Speicher, Software Container, auf gebäudeinterner Kommunikationsentität
- 224:: Speicher, Software Container, auf gebäudeinterner Kommunikationsentität
- 227:: zweite Kommunikationsschnittstelle
- 236:: Kommunikationsverbindung zwischen zweiter Kommunikationsentität 241 und gebäudeexternem Kommunikationsserver 108
- 241:: zweite Kommunikationsentität, z.B. gebäudeinterner Kommunikationsentität, Steuergerät, Smartphone, Handy, TablePC, Notebook

- 302:: Mobilfunkadapter des Servers 108
- 316:: Kommunikationsverbindung zwischen gebäudeinterner Kommunikationsentität 111 und gebäudeexternem Kommunikationsserver 108
- 416:: Funkverbindung des Hub 120 zum Server 108

- 500:: Verfahren zur Steuerung der Kommunikation zwischen gebäudeexternem Kommunikationsserver 108 und einer gebäudeinterner Kommunikationsentität
- 501:: 1. Verfahrensschritt: Speichern
- 502:: 2. Verfahrensschritt: Aufbau einer Kommunikation
- 503:: 3. Verfahrensschritt: Aussenden

- 600:: Verfahren zur Steuerung der Kommunikation zwischen gebäudeexternem Kommunikationsserver 108 und einer gebäudeinterner Kommunikationsentität
- 601:: 1. Verfahrensschritt: Speichern
- 602:: 2. Verfahrensschritt: Aufbau einer Kommunikation
- 603:: 3. Verfahrensschritt: Aussenden

## Patentansprüche

1. Zugangsportal (110, 120) zur Steuerung einer Kommunikation zwischen einem gebäudeexternen Kommunikationsserver (108) eines gebäudeexternen Kommunikationsnetzwerkes (104) und einer gebäudeinternen Kommunikationsentität (111, 112, 121, 122) eines gebäudeinternen Kommunikationsnetzwerks (102), mit:
einem Speicher (202, 212) zum Speichern von Authentifizierungsdaten zur Initiierung einer Kommunikationsverbindung zu dem Kommunikationsserver (108) des gebäudeexternen Kommunikationsnetzwerks (104);
einer ersten Kommunikationsschnittstelle (106, 116) zum Aufbau einer Kommunikation zu dem gebäudeexternen Kommunikationsserver (108) unter Verwendung der gespeicherten Authentifizierungsdaten, wobei die erste Kommunikationsschnittstelle (106) ausgebildet ist, die Kommunikationsverbindung zu dem gebäudeexternen Kommunikationsserver (108) zu überwachen und bei Störung der Kommunikationsverbindung eine Störmeldung zu erzeugen; und
einer zweiten Kommunikationsschnittstelle (107, 117) zum Kommunizieren mit der Kommunikationsentität (111, 112, 121, 122) des gebäudeinternen Kommunikationsnetzwerkes (102), wobei die zweite Kommunikationsschnittstelle (107, 117) ausgebildet ist, ansprechend auf einen Empfang der Störmeldung die gespeicherten Authentifizierungsdaten zur Initiierung einer Kommunikationsverbindung (316) zwischen der gebäudeinternen Kommunikationsentität (111, 112, 121, 122) und dem gebäudeexternen Kommunikationsserver (108) an die gebäudeinterne Kommunikationsentität (111, 112, 121, 122) auszusenden.

2. Zugangsportal (110, 120) nach Anspruch 1,
wobei der Speicher (202, 212) ferner ausgelegt ist, Parameter oder Programme zum Steuern der gebäudeinternen Kommunikationsentität (111, 112, 121, 122) zu speichern; und
wobei die zweite Kommunikationsschnittstelle (107, 117) ausgebildet ist, ansprechend auf den Empfang der Störmeldung die gespeicherten Parameter oder Programme zum Steuern der gebäudeinternen Kommunikationsentität (111, 112, 121, 122) an die gebäudeinterne Kommunikationsentität (111, 112, 121, 122) auszusenden.

3. Zugangsportal (110, 120) nach einem der vorstehenden Ansprüche, ferner mit:
einem Prozessor, der ausgelegt ist, Steuerungsaufgaben zur Steuerung der gebäudeinternen Kommunikationsentität (111, 112, 121, 122) unter Nutzung der zweiten Kommunikationsschnittstelle (107, 117) auszuführen,
wobei der Prozessor ferner ausgelegt ist, nach dem Aussenden der gespeicherten Authentifizierungsdaten an die gebäudeinterne Kommunikationsentität (111, 112, 121, 122) zumindest einen Teil der Steuerungsaufgaben weiterhin auszuführen.

4. Zugangsportal (110, 120) nach Anspruch 3,
wobei der Prozessor ausgelegt ist, den anderen Teil der Steuerungsaufgaben, der von dem Prozessor nicht mehr ausgeführt wird in Form von Programmen auf dem Speicher (202, 212) abzulegen.

5. Zugangsportal (110, 120) nach Anspruch 3 oder 4,
wobei der zumindest eine Teil der Steuerungsaufgaben, der von dem Prozessor weiterhin ausgeführt wird, die zweite Kommunikationsschnittstelle (107, 117) stärker belastet als der andere Teil der Steuerungsaufgaben, der von dem Prozessor nicht mehr ausgeführt wird.

6. Zugangsportal (110, 120) nach einem der Ansprüche 3 bis 5,
wobei der zumindest eine Teil der Steuerungsaufgaben, der von dem Prozessor weiterhin ausgeführt wird, lokale Steuerungsaufgaben umfasst; und
wobei der andere Teil der Steuerungsaufgaben, der von dem Prozessor nicht mehr ausgeführt wird, Fernsteuerungsaufgaben umfasst.

7. Zugangsportal (110, 120) nach einem der vorstehenden Ansprüche,
wobei die gebäudeinterne Kommunikationsentität (111, 112, 121, 122) ein steuerbarer Aktor ist, insbesondere ein Stellglied für Heizung, Jalousien, Alarmanlage, Türschloss, Lichtschalter, Herd, Kühlschrank, Waschmaschine, Kaffeemaschine, Geschirrspülmaschine; oder
wobei die gebäudeinterne Kommunikationsentität (111, 112, 121, 122) ein steuerbarer Sensor ist, insbesondere ein Temperaturfühler, ein Drucksensor, ein Lichtsensor, eine Lichtschranke, eine Uhr, eine Brille.

8. Gebäudeinterne Kommunikationsentität (131) eines gebäudeinternen Kommunikationsnetzwerks (102), mit
einem Speicher (224) zum Speichern von Authentifizierungsdaten zur Initiierung einer Kommunikationsverbindung zu einem Kommunikationsserver (108) eines gebäudeexternen Kommunikationsnetzwerks (104), wobei der Kommunikationsserver (108) des gebäudeexternen Kommunikationsnetzwerks (104) die gebäudeinterne Kommunikationsentität (131) steuert;
einer ersten Kommunikationsschnittstelle (126) zum Aufbau einer Kommunikation zu dem gebäudeexternen Kommunikationsserver (108) unter Verwendung der gespeicherten Authentifizierungsdaten, wobei die erste Kommunikationsschnittstelle (126) ausgebildet ist, die Kommunikationsverbindung zu dem gebäudeexternen Kommunikationsserver (108) zu überwachen und bei Störung der Kommunikationsverbindung eine Störmeldung zu erzeugen; und
einer zweiten Kommunikationsschnittstelle (227) zum Kommunizieren mit einer zweiten Kommunikationsentität (241), wobei die zweite Kommunikationsschnittstelle (227) ausgebildet ist, ansprechend auf einen Empfang der Störmeldung die gespeicherten Authentifizierungsdaten zur Initiierung einer Kommunikationsverbindung (236) zwischen der zweiten Kommunikationsentität (241) und dem gebäudeexternen Kommunikationsserver (108) an die zweite Kommunikationsentität (241) auszusenden.

9. Gebäudeinterne Kommunikationsentität (131) eines gebäudeinternen Kommunikationsnetzwerks (102) nach Anspruch 8, mit
einem Prozessor, der ausgelegt ist, über die zweite Kommunikationsschnittstelle (227) eine Kommunikationsverbindung zu der zweiten Kommunikationsentität (241) aufzubauen, um die gebäudeinterne Kommunikationsentität (131) basierend auf der Kommunikationsverbindung zwischen der zweiten Kommunikationsentität (241) und dem gebäudeexternen Kommunikationsserver (108) durch den gebäudeexternen Kommunikationsserver (108) zu steuern.

10. Gebäudeinterne Kommunikationsentität (131) eines gebäudeinternen Kommunikationsnetzwerks (102) nach Anspruch 8 oder 9,
wobei die Kommunikationsverbindung zwischen der zweiten Kommunikationsentität (131) und dem gebäudeexternen Kommunikationsserver (108) eine Mobilfunkverbindung umfasst.

11. Gebäudeinterne Kommunikationsentität (131) eines gebäudeinternen Kommunikationsnetzwerks (102) nach einem der Ansprüche 8 bis 10,
wobei die zweite Kommunikationsentität (241) eine zweite gebäudeinterne Kommunikationsentität des gebäudeinternen Kommunikationsnetzwerks ist; oder
wobei die zweite Kommunikationsentität (241) ein Steuergerät zum Steuern der gebäudeinternen Kommunikationsentität (131), insbesondere ein Smartphone, ein Mobiltelefon, ein TabletPC oder ein Kommunikationsgerät mit Funkadapter ist.

12. Gebäudeinterne Kommunikationsentität (131) eines gebäudeinternen Kommunikationsnetzwerks (102) nach einem der Ansprüche 8 bis 11,
wobei der Speicher (224) ferner ausgelegt ist, Parameter oder Programme zum Steuern der gebäudeinternen Kommunikationsentität (131) zu speichern; und
wobei die zweite Kommunikationsschnittstelle (227) ausgebildet ist, ansprechend auf den Empfang der Störmeldung die gespeicherten Parameter oder Programme zum Steuern der gebäudeinternen Kommunikationsentität (131) an die zweite Kommunikationsentität (241) auszusenden.

13. Gebäudeinterne Kommunikationsentität (131) eines gebäudeinternen Kommunikationsnetzwerks (102) nach einem der Ansprüche 8 bis 12,
wobei die gebäudeinterne Kommunikationsentität (131) ein steuerbarer Aktor ist, insbesondere ein Stellglied für Heizung, Jalousien, Alarmanlage, Türschloss, Lichtschalter, Herd, Kühlschrank, Waschmaschine, Kaffeemaschine, Geschirrspülmaschine; oder
wobei die gebäudeinterne Kommunikationsentität (131) ein steuerbarer Sensor ist, insbesondere ein Temperaturfühler, ein Drucksensor, ein Lichtsensor, eine Lichtschranke, eine Uhr, eine Brille.

14. Verfahren (500) zur Steuerung einer Kommunikation zwischen einem gebäudeexternen Kommunikationsserver eines gebäudeexternen Kommunikationsnetzwerkes und einer gebäudeinternen Kommunikationsentität eines gebäudeinternen Kommunikationsnetzwerks, mit:
Speichern (501) von Authentifizierungsdaten zur Initiierung einer Kommunikationsverbindung zu dem gebäudeexternen Kommunikationsserver in einem Speicher eines Zugangsportals zur Steuerung der Kommunikation zwischen dem gebäudeexternen Kommunikationsserver und der gebäudeinternen Kommunikationsentität;
Aufbauen (502) einer Kommunikation zu dem gebäudeexternen Kommunikationsserver durch das Zugangsportal unter Verwendung der gespeicherten Authentifizierungsdaten;
Aussenden (503) der gespeicherten Authentifizierungsdaten durch das Zugangsportal an die gebäudeinterne Kommunikationsentität zur Initiierung einer Kommunikationsverbindung zwischen der gebäudeinternen Kommunikationsentität und dem gebäudeexternen Kommunikationsserver bei Störung der Kommunikationsverbindung zwischen dem Zugangsportal und dem gebäudeexternen Kommunikationsserver.

15. Verfahren (600) zur Steuerung einer Kommunikation zwischen einem gebäudeexternen Kommunikationsserver eines gebäudeexternen Kommunikationsnetzwerkes und einer gebäudeinternen Kommunikationsentität eines gebäudeinternen Kommunikationsnetzwerks, mit:
Speichern (601) von Authentifizierungsdaten zur Initiierung einer Kommunikationsverbindung zu dem gebäudeexternen Kommunikationsserver in einem Speicher der gebäudeinternen Kommunikationsentität;
Aufbauen (602) einer Kommunikation zu dem gebäudeexternen Kommunikationsserver durch die gebäudeinterne Kommunikationsentität unter Verwendung der gespeicherten Authentifizierungsdaten; und
Aussenden (603) der gespeicherten Authentifizierungsdaten durch die gebäudeinterne Kommunikationsentität an eine zweite Kommunikationsentität zur Initiierung einer Kommunikationsverbindung zwischen der zweiten Kommunikationsentität und dem gebäudeexternen Kommunikationsserver bei Störung der Kommunikationsverbindung zwischen der gebäudeinternen Kommunikationsentität und dem gebäudeexternen Kommunikationsserver.

## Claims

1. An access portal (110, 120) for controlling a communication between a building-external communication server (108) of a building-external communication network (104) and a building-internal communication entity (111, 112, 121, 122) of a building-internal communication network (102), the access portal comprising:
a storage (202, 212) for storing of authentication data to initiate a communication link with the communication server (108) of the building-external communication network (104);
a first communication interface (106, 116) to establish a communication with the building-external communication server (108) making use of the stored authentication data, wherein the first communication interface (106) is designed to monitor the communication link with the building-external communication server (108) and to generate an error message upon disturbance of the communication link; and
a second communication interface (107, 117) for communicating with the communication entity (111, 112, 121, 122) of the building-internal communication network (102), wherein the second communication interface (107, 117) is designed to respond to a receiving of the error message by sending the stored authentication data for initiating of a communication link (316) between the building-internal communication entity (111, 112, 121,122) and the building-external communication server (108) to the building-internal communication entity (111, 112, 121, 122).

2. The access portal (110, 120) as claimed in claim 1,
wherein the storage (202, 212) is further designed to store parameters or programs for controlling the building-internal communication entity (111, 112, 121, 122); and
wherein the second communication interface (107, 117) is designed to respond to the receiving of the error message by sending the stored parameters or programs for controlling the building-internal communication entity (111, 112, 121, 122) to the building-internal communication entity (111, 112, 121, 122).

3. The access portal (110, 120) as claimed in one of the preceding claims, further comprising:
a processor, which is designed to execute control tasks to control the building-internal communication entity (111, 112, 121, 122) making use of the second communication interface (107, 117),
wherein the processor is further designed to continue to execute at least some of the control tasks after the sending of the stored authentication data to the building-internal communication entity (111, 112, 121, 122).

4. The access portal (110, 120) as claimed in claim 3,
wherein the processor is designed to store the other portion of the control tasks no longer performed by the processor in the form of programs on the storage (202, 212).

5. The access portal (110, 120) as claimed in claim 3 or 4,
wherein the at least one portion of the control tasks which is still executed by the processor is a higher load on the second communication interface (107,117) than the other portion of the control tasks no longer executed by the processor.

6. The access portal (110, 120) as claimed in any one of claims 3 to 5,
wherein the at least one portion of the control tasks which is still executed by the processor comprises local control tasks; and
wherein the other portion of the control tasks no longer executed by the processor comprises remote control tasks.

7. The access portal (110, 120) as claimed in any one of the preceding claims, wherein the building-internal communication entity (111, 112, 121,122) is a controllable actuator, particularly a control element for heating, blinds, alarm system, door lock, light switch, stove, refrigerator, washing machine, coffee maker, dish washing machine; or
wherein the building-internal communication entity (111, 112, 121, 122) is a controllable sensor, particularly a temperature sensor, a pressure sensor, a light sensor, a light barrier, a clock, glasses.

8. A building-internal communication entity (131) of a building-internal communication network (102), comprising:
a storage (224) for storing authentication data to initiate a communication link with a communication server (108) of a building-external communication network (104), wherein the communication server (108) of the building-external communication network (104) controls the building-internal communication entity (131);
a first communication interface (126) to establish a communication with the building-external communication server (108) making use of the stored authentication data, wherein the first communication interface (126) is designed to monitor the communication link with the building-external communication server (108) and to generate an error message upon disturbance of the communication link; and
a second communication interface (227) for communicating with a second communication entity (241), wherein the second communication interface (227) is designed to respond to a receiving of the error message by sending the stored authentication data for initiating of a communication link (236) between the second communication entity (241) and the building-external communication server (108) to the second communication entity (241).

9. The building-internal communication entity (131) of a building-internal communication network (102) as claimed in claim 8, comprising:
a processor, which is designed to establish via the second communication interface (227) a communication link with the second communication entity (241) in order to control the building-internal communication entity (131) based on the communication link between the second communication entity (241) and the building-external communication server (108) by the building-external communication server (108).

10. The building-external communication entity (131) of a building-internal communication network (102) as claimed in claim 8 or 9,
wherein the communication link between the second communication entity (131) and the building-external communication server (108) comprises mobile radio connection.

11. The building-internal communication entity (131) of a communication network inside the building (102) as claimed in any one of claims 8 to 10,
wherein the second communication entity (241) is a second building-internal communication entity of the building-internal communication network; or
wherein the second communication entity (241) is a control unit for controlling the building-internal communication entity (131), particularly a smartphone, a mobile telephone, a tablet PC or a communication device with radio adapter.

12. The building-internal communication entity (131) of a building-internal communication network (102) as claimed in any one of claims 8 to 11,
wherein the storage (224) is moreover designed to save parameters or programs for controlling the building-internal communication entity (131); and
wherein the second communication interface (227) is designed to respond to the receiving of the error message by sending the stored parameters or programs for controlling the building-internal communication entity (131) to the second communication entity (241).

13. The building-internal communication entity (131) of a building-internal communication network (102) as claimed in any one of claims 8 to 12,
wherein the building-internal communication entity (131) is a controllable actuator, particularly a control element for heating, blinds, alarm system, door lock, light switch, stove, refrigerator, washing machine, coffee maker, dish washing machine; or
wherein the building-internal communication entity (131) is a controllable sensor, particularly a temperature sensor, a pressure sensor, a light sensor, a light barrier, a clock, glasses.

14. A method (500) for controlling a communication between a building-external communication server of a building-external communication network and a building-internal communication entity of a building-internal communication network, the method comprising:
storing (501) of authentication data to initiate a communication link with the building-external communication server in a storage of an access portal for controlling the communication between the building-external communication server and the building-internal communication server;
establishing (502) a communication with the building-external communication server by the access portal by making use of the stored authentication data;
sending (503) the stored authentication data by the access portal to the building-internal communication entity to initiate a communication link between the building-internal communication entity and the building-external communication server upon disturbance of the communication link between the access portal and the building-external communication server.

15. A method (600) for controlling a communication between a building-external communication server of a building-external communication network and a building-internal communication entity of a building-internal communication network, the method comprising:
storing (601) of authentication data to initiate a communication link with the building-external communication server in a storage of the building-internal communication entity;
establishing (602) of a communication with the building-external communication server by the building-internal communication entity by making use of the stored authentication data; and
sending (603) of the stored authentication data by the building-internal communication entity to a second communication entity to initiate a communication link between the second communication entity and the building-external communication server upon disturbance of the communication link between the building-internal communication entity and the building-external communication server.

## Revendications

1. Point d'accès (110, 120) pour la commande d'une communication entre un serveur de communication (108) externe au bâtiment d'un réseau de communication (104) externe au bâtiment et une entité de communication (111, 112, 121, 122) interne au bâtiment d'un réseau de communication (102) interne au bâtiment avec :
une mémoire (202, 212) pour enregistrer des données d'authentification en vue d'amorcer une liaison de communication avec le serveur de communication (108) du réseau de communication (104) externe au bâtiment ;
une première interface de communication (106, 116) pour établir une communication avec le serveur de communication (108) externe au bâtiment en utilisant les données d'authentification enregistrées, la première interface de communication (106) étant formée afin de surveiller la liaison de communication au serveur de communication (108) externe au bâtiment et de générer un message de dérangement en cas de dérangement de la liaison de communication ; et
une deuxième interface de communication (107, 117) pour communiquer avec l'entité de communication (111, 112, 121, 122) du réseau de communication (102) interne au bâtiment, la deuxième interface de communication (107, 117) étant formée afin d'envoyer les données d'authentification enregistrées à l'entité de communication (111, 112, 121, 122) interne au bâtiment en vue d'amorcer une liaison de communication (316) entre l'entité de communication (111, 112, 121, 122) interne au bâtiment et le serveur de communication (108) externe au bâtiment en réponse à une réception du message de dérangement.

2. Point d'accès (110, 120) selon la revendication 1,
la mémoire (202, 212) étant conçue également pour enregistrer des paramètres ou programmes destinés à la commande de l'entité de communication (111, 112, 121, 122) interne au bâtiment ; et
la deuxième interface de communication (107, 117) étant formée afin d'envoyer les paramètres ou programmes enregistrés à l'entité de communication (111, 112, 121, 122) interne au bâtiment en vue de commander l'entité de communication (111, 112, 121, 122) interne au bâtiment en réponse à la réception du message de dérangement.

3. Point d'accès (110, 120) selon l'une des revendications précédentes, également avec :
un processeur qui est conçu pour exécuter des tâches de commande pour commander l'entité de communication (111, 112, 121, 122) interne au bâtiment en utilisant la deuxième interface de communication (107, 117)
le processeur étant conçu également pour continuer à exécuter au moins une partie des tâches de commande après l'envoi des données d'authentification enregistrées à l'entité de communication (111, 112, 121, 122) interne au bâtiment.

4. Point d'accès (110, 120) selon la revendication 3,
le processeur étant conçu pour stocker dans la mémoire (202, 212) l'autre partie des tâches de commande, qui ne sont plus exécutées par le processeur, sous la forme de programmes.

5. Point d'accès (110, 120) selon la revendication 3 ou 4,
l'au moins une partie des tâches de commande, qui continue d'être exécutée par le processeur, sollicitant plus la deuxième interface de communication (107, 117) que l'autre partie des tâches de commande qui n'est plus exécutée par le processeur.

6. Point d'accès (110, 120) selon l'une quelconque des revendications 3 à 5,
l'au moins une partie des tâches de commande, qui continue d'être exécutée par le processeur, comprenant des tâches de commande locales ; et
l'autre partie des tâches de commande, qui n'est plus exécutée par le processeur, comprenant des tâches de commande à distance.

7. Point d'accès (110, 120) selon l'une quelconque des revendications précédentes,
l'entité de communication (111, 112, 121, 122) interne au bâtiment étant un acteur commandable, notamment un actionneur pour le chauffage, les stores, les systèmes d'alarme, les serrures de porte, les interrupteurs, les cuisinières, les réfrigérateurs, les machines à laver, les cafetières, les lave-vaisselles ; ou
l'entité de communication (111, 112, 121, 122) interne au bâtiment étant un capteur commandable, notamment un capteur de température, un capteur de pression, un capteur de lumière, une barrière lumineuse, une montre, des lunettes.

8. Entité de communication (131) interne au bâtiment d'un réseau de communication (102) interne au bâtiment avec
une mémoire (224) pour enregistrer des données d'authentification en vue d'amorcer une liaison de communication avec un serveur de communication (108) d'un réseau de communication (104) externe au bâtiment, le serveur de communication (108) du réseau de communication (104) externe au bâtiment commandant l'entité de communication (131) interne au bâtiment ;
une première interface de communication (126) pour établir une communication avec le serveur de communication (108) externe au bâtiment en utilisant les données d'authentification enregistrées, la première interface de communication (126) étant formée afin de surveiller la liaison de communication au serveur de communication (108) externe au bâtiment et de générer un message de dérangement en cas de dérangement de la liaison de communication ; et
une deuxième interface de communication (227) pour communiquer avec une deuxième entité de communication (241), la deuxième interface de communication (227) étant formée afin d'envoyer les données d'authentification enregistrées à la deuxième entité de communication (241) en vue d'amorcer une liaison de communication (236) entre la deuxième entité de communication (241) et le serveur de communication (108) externe au bâtiment en réponse à une réception du message de dérangement.

9. Entité de communication (131) interne au bâtiment d'un réseau de communication (102) interne au bâtiment selon la revendication 8, avec
un processeur qui est conçu pour établir une liaison de communication avec la deuxième entité de communication (241) via la deuxième interface de communication (227) afin de commander l'entité de communication (131) interne au bâtiment par le serveur de communication (108) externe au bâtiment en se basant sur la liaison de communication entre la deuxième entité de communication (241) et le serveur de communication (108) externe au bâtiment.

10. Entité de communication (131) interne au bâtiment d'un réseau de communication (102) interne au bâtiment selon la revendication 8 ou 9,
la liaison de communication entre la deuxième entité de communication (131) et le serveur de communication (108) externe au bâtiment comprenant une connexion mobile.

11. Entité de communication (131) interne au bâtiment d'un réseau de communication (102) interne au bâtiment selon l'une quelconque des revendications 8 à 10,
la deuxième entité de communication (241) étant une entité de communication interne au bâtiment par le serveur de communication interne au bâtiment ; ou
la deuxième entité de communication (241) étant un dispositif de commande pour commander l'entité de communication (131) interne au bâtiment, notamment un smartphone, un téléphone portable, une tablette ou un appareil de communication avec adaptateur sans fil.

12. Entité de communication (131) interne au bâtiment d'un réseau de communication (102) interne au bâtiment selon l'une quelconque des revendications 8 à 11,
la mémoire (224) étant conçue également pour enregistrer des paramètres ou programmes afin de commander l'entité de communication (131) interne au bâtiment ; et
la deuxième interface de communication (227) étant formée pour envoyer les paramètres ou programmes enregistrés à la deuxième entité de communication (241) en vue de commander l'entité de communication (131) interne au bâtiment en réponse à la réception du message de dérangement.

13. Entité de communication (131) interne au bâtiment d'un réseau de communication (102) interne au bâtiment selon l'une quelconque des revendications 8 à 12,
l'entité de communication (131) interne au bâtiment étant un acteur commandable, notamment un actionneur pour le chauffage, les stores, les systèmes d'alarme, les serrures de porte, les interrupteurs, les cuisinières, les réfrigérateurs, les machines à laver, les cafetières, les lave-vaisselles ; ou
l'entité de communication (131) interne au bâtiment étant un capteur commandable, notamment un capteur de température, un capteur de pression, un capteur de lumière, une barrière lumineuse, une montre, des lunettes.

14. Procédé (500) destiné à la commande d'une communication entre un serveur de communication externe au bâtiment d'un réseau de communication externe au bâtiment et une entité de communication interne au bâtiment d'un réseau de communication interne au bâtiment, avec :
enregistrement (501) de données d'authentification en vue d'amorcer une liaison de communication avec le serveur de communication externe au bâtiment dans une mémoire d'un point d'accès pour commander la communication entre le serveur de communication externe au bâtiment et l'entité de communication interne au bâtiment ;
établissement (502) d'une communication avec le serveur de communication externe au bâtiment via le point d'accès en utilisant les données d'authentification enregistrées ;
envoi (503) des données d'authentification enregistrées à l'entité de communication interne au bâtiment via le point d'accès en vue d'amorcer une liaison de communication entre l'entité de communication interne au bâtiment et le serveur de communication externe au bâtiment lors d'un dérangement de la liaison de communication entre le point d'accès et le serveur de communication externe au bâtiment.

15. Procédé (600) destiné à la commande d'une communication entre un serveur de communication externe au bâtiment d'un réseau de communication externe au bâtiment et une entité de communication interne au bâtiment d'un réseau de communication interne au bâtiment, avec :
enregistrement (601) de données d'authentification en vue d'amorcer une liaison de communication avec le serveur de communication externe au bâtiment dans une mémoire de l'entité de communication interne au bâtiment ;
établissement (602) d'une communication avec le serveur de communication externe au bâtiment via l'entité de communication interne au bâtiment en utilisant les données d'authentification enregistrées ; et
envoi (603) des données d'authentification enregistrées à une deuxième entité de communication via l'entité de communication interne au bâtiment en vue d'amorcer une liaison de communication entre la deuxième entité de communication et le serveur de communication externe au bâtiment lors d'un dérangement de la liaison de communication entre l'entité de communication interne au bâtiment et le serveur de communication externe au bâtiment.
